# EUROPEAN PATENT SPECIFICATION

(11) **EP 2 722 367 B1**
(45) Date of publication and mention of the grant of the patent: **28.03.2018**
(21) Application number: 12188144.5
(22) Date of filing: 11.10.2012
(51) Int. Cl.: C09B 23/00, B42D 25/00, B41M 5/323

(54) **INFRARED DYES FOR LASER MARKING**
INFRAROTFARBSTOFFE FÜR DIE LASERMARKIERUNG
COLORANTS INFRAROUGES POUR MARQUAGE AU LASER

(43) Date of publication of application: 23.04.2014
(73) Proprietor: AGFA-GEVAERT, 2640 Mortsel (BE)
(72) Inventor: Callant, Paul, 2640 Mortsel (BE); Waumans, Bart, 2640 Mortsel (BE)

(56) References cited:
- EP-A1- 0 841 189
- EP-A1- 1 093 015
- EP-A1- 2 463 096
- EP-A1- 2 567 825
- EP-A2- 1 466 728
- DE-A1- 4 331 162
- DE-A1- 19 957 001
- JP-A- 2000 267 265
- JP-A- 2002 023 360
- JP-A- 2004 077 613
- JP-A- 2008 088 426
- US-A1- 2003 124 455
- V.I.PROKHORENKO ET AL.: "Nonlinear Absorption Spectroskopy of Polymethine Dyes in the 1064 nm Region", UKRAINSKII FIZICHESKII ZHURNAL, vol. 30, no. 10, 1985, pages 1480-1488, XP002691675,
- DATABASE WPI Week 200236, Derwent Publications Ltd., London, GB; AN 2002-322445 & JP 2002 023360 A (FUJI PHOTO FILM CO LTD) 23 January 2002
- DATABASE WPI Week 200437, Derwent Publications Ltd., London, GB; AN 2004-394022 & JP 2004 077613 A (FUJI FILM CORP) 11 March 2004
- DATABASE WPI Week 200840, Derwent Publications Ltd., London, GB; AN 2008-G30062 & JP 2008 088426 A (NIPPON KAYAKU KK) 17 April 2008
- DATABASE WPI Week 200114, Derwent Publications Ltd., London, GB; AN 2001-127059 & JP 2000 267265 A (FUJI FILM CORP) 29 September 2000

## Description

### Technical Field

This invention relates to laser marking of articles containing infrared dyes, especially security documents.

### Background Art

Articles are laser marked in order to ensure product safety and authenticity. For example, packaging material of pharmaceuticals is laser marked to enable a consumer to verify the genuineness of a product. Laser marked security cards are widely used for various applications such as identification purposes (ID cards) and financial transfers (credit cards). Such cards typically consist of a laminated structure consisting of various papers or plastic laminates and layers wherein some of them may carry alphanumeric data and a picture of the card holder. So called 'smart cards' can also store digital information by including an electronic chip in the card body.

A principal objective of such articles and security cards is that they cannot be easily modified or reproduced in such a way that the modification or reproduction is difficult to distinguish from the original.

Two techniques frequently used for preparing security documents are laser marking and laser engraving. In literature, laser engraving is often incorrectly used for laser marking. In laser marking an article, a colour change is observed by local heating of material in the bulk of the article, while in laser engraving material is removed by ablation.

Today, laser marking employed in the manufacture of security documents consists solely of a "black" laser marking method via the carbonization of a polymer, usually polycarbonate as disclosed in e.g. EP 2181858 A (AGFA). There has been considerable interest in being able to produce colour images through laser marking.

EP 0174054 A (POLAROID) discloses a heat sensitive element used in a thermal imaging method for forming colour images which relies upon the irreversible unimolecular fragmentation of one or more thermally unstable carbamate moieties of an organic compound to effect a visually discernible colour shift from colourless to coloured, from coloured to colourless or from one colour to another. EP 0174054 A (POLAROID) suggests using infrared absorbers that absorb radiation at 760 nm, 820 nm and 880 nm.

US 4720449 (POLAROID) discloses a thermal imaging method for producing colour images on a support carrying at least one layer of a colourless compound, such as di- or triarylmethane, by conversion of electromagnetic radiation into heat. The laser beams may have different wavelengths in a range above 700nm with at least about 60 nm apart so that each imaging layer having a different infrared absorber may be exposed separately to convert a colourless triarylmethane compound into a coloured form. US 4720449 (POLAROID) suggests infrared absorbers that absorb radiation at 760 nm, 820 nm and 1100 nm, and to use cyanine, merocyanine or thiopyrylium dyes that are substantially non-absorbing in the visible region of the electromagnetic spectrum so that it will not add any substantial amount of colour to Dmin areas, i.e. the highlight areas of an image. However, no examples of infrared dyes absorbing at 1100 nm are given.

In generating multicolour images with infrared lasers, so-called colour contamination or colour fogging may occur when the infrared absorption spectra overlap too much. Less overlap results in a larger achievable colour gamut. US 4720449 (POLAROID) already disclosed that the infrared dyes should have absorption maxima that are at least about 60 nm apart. For a high colour gamut, it would be desirable to have larger gaps than 60 nm possible between the absorption maxima of the infrared dyes. However, there are two problems that limit the options for doing so.

A first problem is that dyes below about 830 nm tend to absorb also light in the visual spectrum from 400 to 700 nm, resulting e.g. in a white ID card have an annoying background discoloration.

A second problem is that, although lasers above 1100 nm are available, to the best of our knowledge infrared dyes with an absorption maximum above 1100 nm having minor or no absorption in the visual spectrum are not available or known.

US 2006276335 A (SONY) discloses a reversible multicolour thermal recording medium capable of recording and erasing repeatedly high-contrast clear images free of colour fogging without causing colour deterioration. The reversible multicolour recording medium includes recording layers containing a light-heat converting composition which generates heat upon absorption of near infrared rays having absorption peak wavelengths in the near infrared region between 750 nm and 1500 nm. The fact that the multicolour thermal recording medium is reversible makes it unsuitable for the security purposes of ensuring product safety and authenticity. Furthermore, the examples show reversible multicolour thermal recording media using infrared dyes having an absorption maximum between 785 nm and 980 nm only.

DE 19957001 (FEW CHEMICALS) discloses infrared-absorbing, thermally stable and highly soluble cyanine dyes for heat-moderated laser recording materials, such as printing plates, having an absorption maximum between 1000 nm and 1100 nm. The highest absorption maximum in the examples for a benzo(cd)indolium cyanine dye is 1090 nm.

JP 2008088426 (NIPPON KAYAKU) discloses cyanine dyes having a maximum absorption in a wavelength range of 400 to 1100 nm and having high solubility in ketone solvents.

US 5948600 (AGFA) discloses a wide range of different types of infrared absorbing compounds having minor absorption in the visual spectrum for a method for forming a heat mode image from a reducible organic metal salt. However, again no dyes absorbing above 1100 nm are disclosed.

US 2012119171 discloses near-infrared absorbing dyes having a specific fluorinated anion for obtaining good solvent solubility. The dyes are advantageously used in a process of fabricating semiconductor devices. Paragraph [0111] states that the dyes absorb radiation in a wavelength range of 800 to 1200 nm but the application is silent on any wavelength of an infrared absorption maximum above 1100 nm.

EP2463096 (AGFA) discloses a security document precursor including, in order, at least: a) a transparent biaxially stretched polyethylene terephthalate foil; b) a colorless color forming layer containing at least an infrared absorber, a color forming component and a polymeric binder; and c) a polymeric support; wherein the colorless color forming layer contains at least one component forming a compound having a melting temperature of less than 20 degrees centigrade upon laser marking the colorless color forming layer with an infrared laser. A preferred infrared absorber is an IR dye absorbing at 1064 nm.

There is a need for infrared dyes having minor absorption in the visual spectrum and a maximum absorption above 1100 nm, so that the infrared absorption peaks of the different infrared sensitive recording layers can be spaced well apart in order to realize a multicolour laser markable article having a high colour gamut and minor background discoloration.

### Summary of invention

In order to overcome the problems described above, preferred embodiments of the present invention provide an infrared dye as defined by **claim 1.**

The present invention provides infrared dyes soluble in methylene chloride having an infrared absorption maximum above 1100 nm. This allowed to produce multicolour laser marked security documents having reduced background discoloration and enhanced colour gamut.

Further advantages and preferred embodiments of the present invention will become apparent from the following description.

### Brief description of drawings

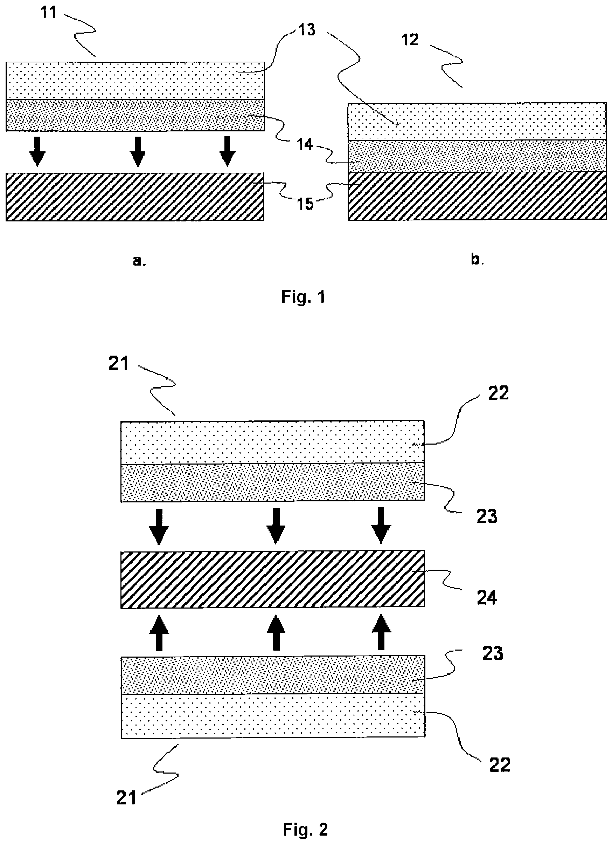

Figure 1.a shows a cross section of an embodiment of a laser markable laminate 11 according to the present invention including a transparent polymeric support 13 and a laser markable layer 14 being laminated onto a opaque core support 15, while Figure 1.b shows a cross section of the end result, i.e. a laser markable article 12 obtained by the lamination in Figure 1.a.
Figure 2 shows a cross section of an embodiment of two laser markable laminates 21 according to the present invention including a transparent polymeric support 22 and a laser markable layer 23 being laminated onto an opaque core support 24. The end result is a symmetrical laser markable article.

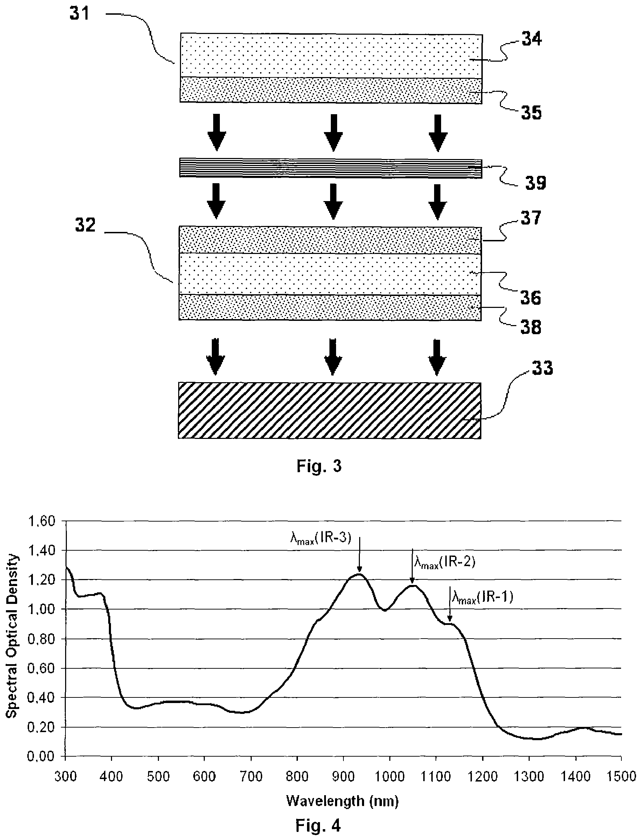

Figure 3 shows a cross section of an embodiment of an asymmetrical laser markable article wherein a colour laser markable outer laminate 31 including a transparent polymeric support 34 and a laser markable layer 35, an adhesive foil 39 which may carry a security feature (not shown), a colour laser markable inner laminate 32 including a transparent polymeric support 36 and colour laser markable layers 37 and 38 are laminated onto an opaque core support 33. The end result is a three-colour asymmetrical laser markable article.
Figure 4 shows the absorption spectrum from 300 to 1500 nm measured of the laser markable article LMA2 in Example 3.

### Description of embodiments

### Definitions

The terms "polymeric support" and "foil", as used herein, mean a self-supporting polymer-based sheet, which may be associated with one or more adhesion layers e.g. subbing layers. Supports and foils are usually manufactured through extrusion.

The term "layer", as used herein, is considered not to be self-supporting and is manufactured by coating it on a (polymeric) support or foil.

The term "leuco dye" as used herein refers to compounds which can change from essentially colourless to coloured when heated.

"PET" is an abbreviation for polyethylene terephthalate.

"PETG" is an abbreviation for polyethylene terephthalate glycol, the glycol indicating glycol modifiers which are incorporated to minimize brittleness and premature aging that occur if unmodified amorphous polyethylene terephthalate (APET) would be used in the production of cards.

"PET-C" is an abbreviation for crystalline PET, i.e. a biaxially stretched polyethylene terephthalate. Such a polyethylene terephthalate support has excellent properties of dimensional stability.

The definition of "security feature" corresponds with the normal definition as adhered to in the "Glossary of Security Documents - Security features and other related technical terms" as published by the Consilium of the Council of the European Union on September 12, 2012 (Version: v. 09916-08.R.2.C.1.en) on its website: http://www.consilium.europa.eu/prado/EN/glossaryPopup.html.

The term "alkyl" means all variants possible for each number of carbon atoms in the alkyl group i.e. methyl, ethyl, for three carbon atoms: n-propyl and isopropyl; for four carbon atoms: n-butyl, 1-isobutyl, 2-isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably phenyl group or naphthyl group including one, two, three or more C₁ to C₆-alkyl groups.

Unless otherwise specified a substituted or unsubstituted alkaryl group is preferably a C₁ to C₆-alkyl group including an aryl group, preferably a phenyl group or naphthyl group.

Unless otherwise specified a substituted or unsubstituted aryl group is preferably a substituted or unsubstituted phenyl group or naphthyl group.

A cyclic group includes at least one ring structure and may be a monocyclic- or polycyclic group, meaning one or more rings fused together.

A heterocyclic group is a cyclic group that has atoms of at least two different elements as members of its ring(s).The counterparts of heterocyclic groups are homocyclic groups, the ring structures of which are made of carbon only. Unless otherwise specified a substituted or unsubstituted heterocyclic group is preferably a five- or six-membered ring substituted by one, two, three or four heteroatoms, preferably selected from oxygen atoms, nitrogen atoms, sulphur atoms, selenium atoms or combinations thereof.

An alicyclic group is a non-aromatic homocyclic group wherein the ring atoms consist of carbon atoms.

The term "heteroaryl group" means a monocyclic- or polycyclic aromatic ring comprising carbon atoms and one or more heteroatoms in the ring structure, preferably, 1 to 4 heteroatoms, independently selected from nitrogen, oxygen, selenium and sulphur. Preferred examples of heteroaryl groups include, but are not limited to, pyridinyl, pyridazinyl, pyrimidyl, pyrazyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl. and oxazolyl. A heteroaryl group can be unsubstituted or triazolyl, pyrazinyl, pyrimidinyl, tetrazolyl, furyl, thienyl, isoxazolyl, thiazolyl, isoxazolyl, and oxazolyl. A heteroaryl group can be unsubstituted or substituted with one, two or more suitable substituents. Preferably, a heteroaryl group is a monocyclic ring, wherein the ring comprises 1 to 5 carbon atoms and 1 to 4 heteroatoms.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted alkyl group, a substituted alkenyl group, a substituted alkynyl group, a substituted aralkyl group, a substituted alkaryl group, a substituted aryl, a substituted heteroaryl and a substituted heterocyclic group are preferably substituted by one or more substituents selected from the group consisting of methyl, ethyl, n-propyl, isopropyl, n-butyl, 1-isobutyl, 2-isobutyl and tertiary-butyl, ester, amide, ether, thioether, ketone, aldehyde, sulfoxide, sulfone, sulfonate ester, sulphonamide, -Cl, -Br, -I, -OH, -SH, -CN and -NO₂.

### Infrared Dyes

The laser markable article according to the present invention comprises an infrared dye having a chemical structure A-B-C consisting of a dye cation and an anion to compensate the charge of the dye cation, wherein the nucleus group A of the dye cation is selected from NucA-1 to NucA-3: 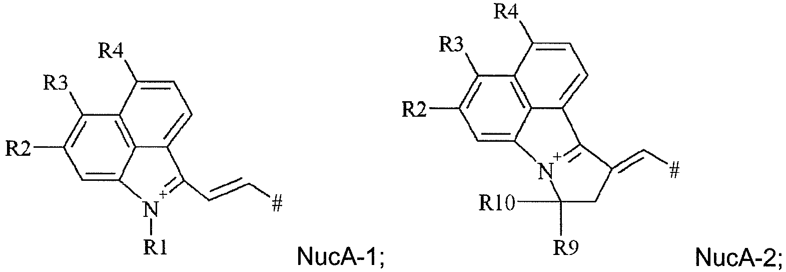 and 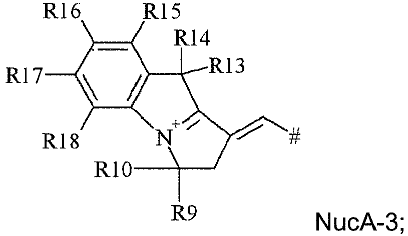 wherein the chain group B of the dye cation is selected from ChB-1 to ChB-9: 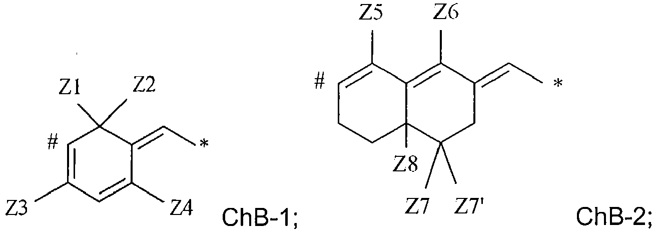 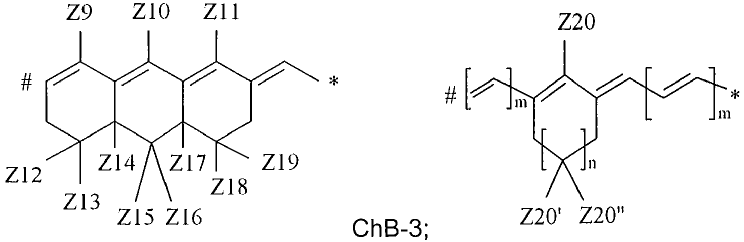 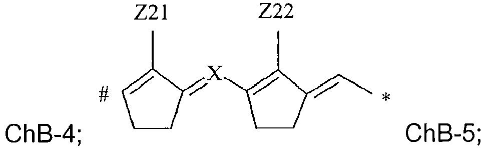 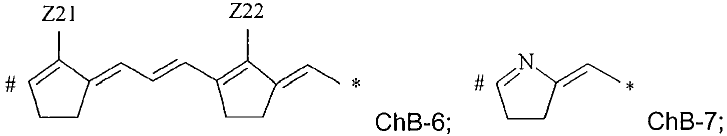 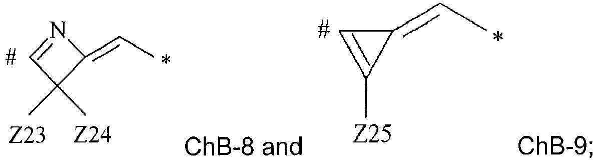 and wherein the nucleus group C of the dye cation is selected from NucC-1 to NucC-3: 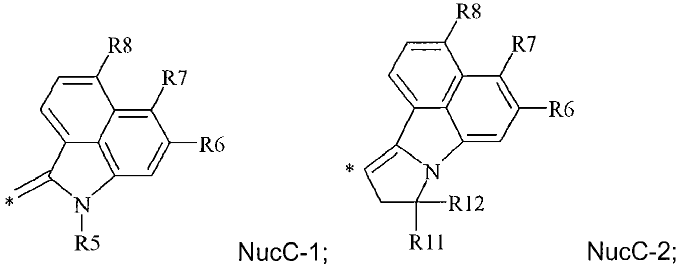 and 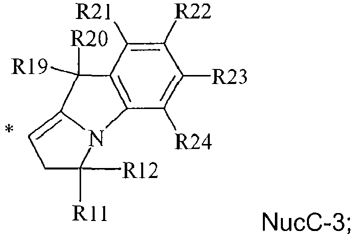 with # indicating the point of attachment between groups A and B; with * indicating the point of attachment between groups B and C; and wherein, R1 and R5 each independently represent an alkyl group having 1 to 10 carbon atoms; R3 and R7 each independently represent hydrogen, an alkoxy group having 1 to 10 carbon atoms; a thioalkyl group having 1 to 10 carbon atoms; a cyanide group; an ester group having 2 to 6 carbon atoms; an amide group having 2 to 6 carbon atoms; or a halogen; R2, R4, R6 and R8 represent hydrogen; or R2 and R3 may represent the necessary atoms to form a five- or six-membered ring including an oxygen or nitrogen atom directly attached to the carbon atom carrying the R3 group; R4 and R3 may represent the necessary atoms to form a five- or six-membered ring including an oxygen or nitrogen atom directly attached to the carbon atom carrying the R3 group; R6 and R7 may represent the necessary atoms to form a five- or six-membered ring including an oxygen or nitrogen atom directly attached to the carbon atom carrying the R7 group; R8 and R7 may represent the necessary atoms to form a five- or six-membered ring including an oxygen or nitrogen atom directly attached to the carbon atom carrying the R7 group; R9 to R12 each independently represent hydrogen or an alkyl group having 1 to 8 carbon atoms, or R9 and R10 and/or R11 and R12 may represent the necessary atoms to form an alicyclic five- or six-membered ring; R13, R14, R19, R20 each independently represent an alkyl group having 1 to 8 carbon atoms; R15 to R18 each independently represent hydrogen or one of R15 and R16, R16 and R17 or R17 and R18 may represent the necessary atoms to form a benzene ring; R21 to R24 each independently represent hydrogen or one of R21 and R22, R22 and R23 or R23 and R24 may represent the necessary atoms to form a benzene ring; Z1 and Z2 each independently represent an alkyl group having 1 to 6 carbon atoms, a cyanide group, an ester group having 2 to 6 carbon atoms, an amide group having 2 to 6 carbon atoms, an alicyclic group having 5 to 14 carbon atoms, a heterocyclic group having 2 to 14 carbon atoms, an aryl group having 6 to 14 carbon atoms or a heteroaryl group having 2 to 14 carbon atoms; or Z1 and Z2 may represent the necessary atoms to form an alicyclic group having 5 to 14 carbon atoms or a heterocyclic group having 4 to 14 carbon atoms; Z3 to Z6 each independently represent hydrogen or halogen; Z7 and Z7' each independently represent hydrogen, an alkyl group having 1 to 6 carbon atoms, a cyanide group, an ester group having 2 to 6 carbon atoms, an amide group having 2 to 6 carbon atoms, an alicyclic group having 5 to 14 carbon atoms, a heterocyclic group having 2 to 14 carbon atoms, an aryl group having 6 to 14 carbon atoms or a heteroaryl group having 4 to 14 carbon atoms, or Z7 and Z7' may represent the necessary atoms to form an alicyclic group having 5 to 14 carbon atoms or a heterocyclic group having 4 to 14 carbon atoms; Z8 represents hydrogen or if at least one of Z7 and Z7' represents hydrogen Z8 may represent an alkyl group having 1 to 6 carbon atoms, a cyanide group, an ester group having 2 to 6 carbon atoms, an amide group having 1 to 6 carbon atoms or an aryl group having 6 to 14 carbon atoms; Z9, Z10 and Z11 each independently represent hydrogen or halogen; Z12 to Z19 each independently represent hydrogen, an alkyl group having 1 to 6 carbon atoms, an aryl group having 6 to 14 carbon atoms, or a heteroaryl group having 2 to 14 carbon atoms, a cyanide group, an ester group having 2 to 6 carbon atoms, an amide group having 2 to 6 carbon atoms or, one or more of Z12 and Z13, Z15 and Z16 and Z18 and Z19 may represent the necessary atoms to form an alicyclic group having 5 to 14 carbon atoms or a heterocyclic group having 4 to 14 carbon atoms; Z20 represents hydrogen, a halogen, a thioalkyl group having 1 to 8 carbon atoms, a thioaryl group having 5 to 14 carbon atoms, a thioheteroaryl group having 3 to 14 carbon atoms, an aryl group having 6 to 14 carbon atoms, a diarylamino group, an alkylsulfonyl group having 1 to 8 carbon atoms , an arylsulfonyl group having 6 to 14 carbon atoms or a heteroarylsulfonyl group having 2 to 14 carbon atoms; the integers m and n independently have a value of 0 or 1; Z20' and Z20" each independently represent hydrogen, an alkyl group having 1 to 8 carbon atoms, a cyanide group, an ester group having 2 to 8 carbon atoms, an amide group having 2 to 8 carbon atoms or an aryl group having 6 to 14 carbon atoms or Z20' and Z20" may represent the necessary atoms to form an alicyclic group having 5 to 14 carbon atoms or a heterocyclic group having 4 to 14 carbon atoms; Z21 and Z22 each independently represent hydrogen, halogen, a thioalkyl group having 1 to 8 carbon atoms or a thioaryl group having 5 to 14 carbon atoms; X represents nitrogen, a -CH-group or if both Z21 and Z22 represent hydrogen then X may represent a -CR-group with R representing an aryl group having 6 to 14 carbon atoms; Z23 and Z24 each independently represent an alkyl group having 1 to 8 carbon atoms, an aryl group having 6 to 14 carbon atoms or Z23 and Z24 may represent the necessary atoms to form a five- or six-membered ring; Z25 represents hydrogen or an aryl group; with the proviso that when the chain group ChB-4 with the integer m = 0 is combined simultaneously with NucA-1 and NucC-1 that R3 and R6 do not represent hydrogen.

In the above description of the infrared # and * indicate the point of attachment between groups A and B, respectively the point of attachment between groups B and C. The concept of this is exemplified here below by Formula (I) for an infrared dye A-B-C having one anion A and a dye cation with NucA-1 as the nucleus group A , ChB-1 as the chain group B and NucC-1 as the nucleus group C:

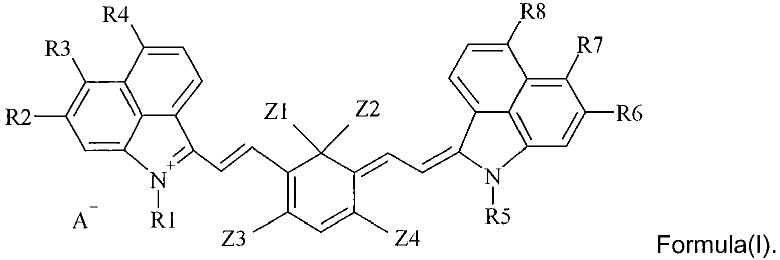

The infrared dye has an absorption maximum in the infrared region λₘₐₓ(IR) of larger than 1100 nm, preferably between 1125 nm and 1400 nm, more preferably between 1140 nm and 1300 nm, most preferably between 1150 nm and 1200 nm as measured by absorption spectroscopy in methylene chloride including 6.5 x 10⁻⁶ wt% of methanesulfonic acid based on the total weight of methylenechloride.

In a preferred embodiment, the infrared dye having a dye cation with the A-B-C chemical structure includes as the nuclei A respectively C, one of the combinations NucA-1 and NucC-1, NucA-2 and NucC-2 and NucA-3 and NucC-3, more preferably one of the combination NucA-1 and NucC-1 and NucA-2 and NucC-2, and most preferably the combination NucA-2 and NucC-2.

In a particularly preferred embodiment, the infrared dye having a dye cation with the A-B-C chemical structure includes NucA-2 and NucC-2 as the nuclei A respectively C, and ChB-4 as the chain group, more preferably the chain group ChB-4 with Z20 representing a phenyl group, an alkylsulfonyl group containing 1 to 8 carbon atoms, an arylsulfonyl group containing 6 to 14 carbon atoms or a heteroarylsulfonyl group containing 2 to 14 carbon atoms, most preferably the integers m and n have a value of 0.

In a preferred embodiment of the infrared dye, the integer n has a value of 0, because it was observed that a larger background discolouration was obtained when the integer n has a value of 1.

In a preferred embodiment of the infrared dye, the integer m has a value of 0 for reasons of chemical stability.

In a preferred embodiment of the infrared dye, R1 and R5 each independently represent a branched alkyl group, more preferably an α-branched alkyl group and most preferably an asymmetrical α-branched alkyl group. It was observed that the solubility of the infrared dye drastically increases by using a branched alkyl group. The solubility of the infrared dye increases further from a branched alkyl group to an α-branched alkyl group to an asymmetrical α-branched alkyl group.

The meaning of an asymmetrical α-branched alkyl group is explained using the nucleus NucA-1 according to Formula (II):

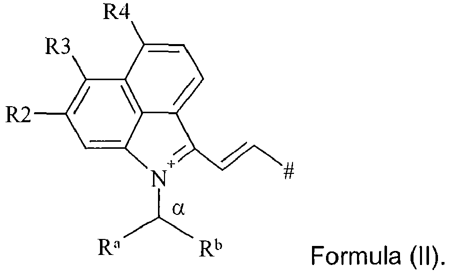

The first carbon atom of R1 attached to nitrogen in Formula (I) is the α-carbon atom where the branching of the alkyl group takes place in case of an α-branched alkyl group R1 having 1 to 10 carbon atoms. In an asymmetrical α-branched alkyl group, the groups R^{a} and R^{b} differ from each other.

The groups R1 and R5 in the nucleus NucA-1 respectively the nucleus NucC-1 are preferably represented by CHR^{a}R^{b} , wherein R^{a} represents hydrogen or an alkyl group including 1 to 4 carbon atoms and R^{b} represents an alkyl group including 1 to 9 carbon atoms, more preferably R^{a} represents an alkyl group including 1 to 4 carbon atoms and R^{b} represents an alkyl group including 1 to 8 carbon atoms, and even more preferably R^{a} represents an alkyl group including 1 to 4 carbon atoms and R^{b} represents an alkyl group including 2 to 8 carbon atoms, and most preferably the groups R^{a} and R^{b} differ from each other and R^{a} represents an alkyl group including 1 to 4 carbon atoms and R^{b} represents an alkyl group including 2 to 8 carbon atoms.

In a preferred embodiment of the infrared dye, R2, R4, R6 and R8 represent hydrogen, more preferably R2 to R4 and R6 to R8 all represent hydrogen.

In a preferred embodiment of the infrared dye, R2 to R4 and R6 to R8 all represent hydrogen and R1 and R5 each independently represent a branched alkyl group, more preferably an α-branched alkyl group and most preferably an asymmetrical α-branched alkyl group.

In a preferred embodiment of the infrared dye, R9 to R12 each independently represent an alkyl group having 1 to 8 carbon atoms.

In a preferred embodiment of the infrared dye, R15 to R18 each independently represent hydrogen or one of R15 and R16, R16 and R17 or R17and R18 represent the necessary atoms to form an unsubstituted benzene ring.

In a preferred embodiment of the infrared dye, R21 to R24 each independently represent hydrogen or one of R21 and R22, R22 and R23 or R23 and R24 represent the necessary atoms to form an unsubstituted benzene ring.

In a preferred embodiment, the infrared dye having a dye cation with the A-B-C chemical structure includes a chain group B selected from the group consisting of ChB-1 to ChB-6.

In a particularly preferred embodiment, the infrared dye having a dye cation with the A-B-C chemical structure includes NucA-1 and NucC-1 as the nuclei A respectively C, and ChB-4 as the chain group, more preferably the chain group ChB-4 with Z20 representing a phenyl group, a diphenylamino group, an alkylsulfonyl group containing 1 to 8 carbon atoms, an arylsulfonyl group containing 6 to 14 carbon atoms or a heteroarylsulfonyl group containing 2 to 14 carbon atoms, even more preferably the chain group ChB-4 with Z20 representing a phenylsulfonyl group, a para-nitrophenylsulfonyl group, a para-alkoxyphenylsulfonyl group wherein the alkoxy group contains 1 to 6 carbon atoms or a para-chlorophenylsulfonyl group, and most preferably the integers m and n have a value of 0.

In a preferred embodiment of the infrared dye, Z1 and Z2 represent a cyclic group selected from the group consisting of a cyclopentane-1,3-dione group and a barbituric acid group, preferably a barbituric acid group wherein the nitrogen atoms are substituted by an alkyl group, an aryl group, an alkaryl group or an aralkyl group.

In a preferred embodiment of the infrared dye, Z3 and Z4 represent hydrogen or chlorine, more preferably hydrogen.

In a preferred embodiment of the infrared dye, Z3 and Z4 each independently represent hydrogen or chlorine, more preferably Z3 and Z4 represent hydrogen or chlorine, and most preferably Z3 and Z4 represent hydrogen.

In a preferred embodiment of the infrared dye, Z5 and Z6 each independently represent hydrogen or chlorine, more preferably at least one of Z5 and Z6 represents chlorine.

In a preferred embodiment of the infrared dye, Z7 and Z7' represent the necessary atoms for forming preferably a barbituric acid group wherein the nitrogen atoms are substituted by an alkyl group, an aryl group, an alkaryl group or an aralkyl group.

In a particularly preferred embodiment of the infrared dye, Z5 represents chlorine; Z6 represents hydrogen; and Z7 and Z7' represent the necessary atoms for forming preferably a barbituric acid group wherein the nitrogen atoms are substituted by an alkyl group, an aryl group, an alkaryl group or an aralkyl group.

In a preferred embodiment of the infrared dye, Z9 to Z11 all represent hydrogen or one or two of Z9 to Z10 represents chlorine.

In one embodiment of the infrared dye, Z12 to Z19 all represent hydrogen.

In one preferred embodiment of the infrared dye, Z20, Z21 and Z22 all represent chlorine.

In another preferred embodiment, Z20 represents a phenyl group, a diphenylamino group, an alkylsulfonyl group containing 1 to 8 carbon atoms, an arylsulfonyl group containing 6 to 14 carbon atoms or a heteroarylsulfonyl group containing 2 to 14 carbon atoms, more preferably Z20 represents a phenylsulfonyl group, a para-nitrophenylsulfonyl group, a para-alkoxyphenylsulfonyl group wherein the alkoxy group contains 1 to 6 carbon atoms or a para-chlorophenylsulfonyl group, and most preferably the integers m and n have a value of 0.

In a preferred embodiment of the infrared dye, Z21 and Z22 each independently represent hydrogen or halogen, more preferably hydrogen.

In a preferred embodiment of the infrared dye, X represents nitrogen or a -CH-group, more preferably a -CH-group.

In a preferred embodiment of the infrared dye, Z23 and Z24 both represent a methyl group or ethyl group, more preferably Z23 and Z24 both represent a methyl group.

In a preferred embodiment of the infrared dye, Z1 and Z2 represent a cyclic group selected from the group consisting of a cyclopentane-1,3-dione group and a barbituric acid group wherein the nitrogen atoms are substituted by an alkyl group, an aryl group, an alkaryl group or an aralkyl group; Z3 and Z4 represent hydrogen; Z5 and Z6 each independently represent hydrogen or chlorine, more preferably at least one of Z5 and Z6 represents chlorine; Z7 and Z7' represent the necessary atoms for forming a barbituric acid group, preferably a barbituric acid group wherein the nitrogen atoms are substituted by an alkyl group, an aryl group, an alkaryl group or an aralkyl group; Z9 to Z11 all represent hydrogen; Z12 to Z19 all represent hydrogen; and Z20 to Z22 all represent chlorine.

In a preferred embodiment of the infrared dye, the anion to compensate the charge of the dye cation is selected from the group consisting of chloride, bromide and iodide ions, fluoroalkylsulfonates, arylsulfonates and alkylsulfonates.

In a more preferred embodiment of the infrared dye, the anion to compensate the charge of the dye cation is selected from the group consisting of a chloride ion, triflate, 1,1,1-trifluoroethanesulfonate, pentafluoroethanesulfonate, nonafluorobutanesulfonate, tosylate, benzenesulfonate, 4-fluorobenzenesulfonate, 1,2,3,4,5-pentafluorobenzenesulfonate, mesylate and butanesulfonate.

In a preferred embodiment of the infrared dye, the anion to compensate the charge of the dye cation is a non-fluorinated anion. The advantage is that the infrared dyes could be prepared lacking fluorinated anions to compensate the charge of the dye cation without causing problems of dye solubility in an apolar medium or having ecologically undesirable fluorinated waste in the synthesis of the infrared dyes. This is especially the case for the infrared dyes having a dye cation with the A-B-C chemical structure including NucA-1 and NucC-1 as the nuclei A respectively C, wherein R1 and R5 each independently represent a branched alkyl group, more preferably an α-branched alkyl group and most preferably an asymmetrical α-branched alkyl group.

In a particularly preferred embodiment, the infrared dye having a dye cation with the A-B-C chemical structure includes a non-fluorinated anion to compensate the charge of the dye cation having NucA-1 and NucC-1 as the nuclei A respectively C, wherein R1 and R5 each independently represent a branched alkyl group, more preferably an α-branched alkyl group and most preferably an asymmetrical α-branched alkyl group; and ChB-4 as the chain group, more preferably the chain group ChB-4 with Z20 representing an alkylsulfonyl group containing 1 to 8 carbon atoms, an arylsulfonyl group containing 6 to 14 carbon atoms or a heteroarylsulfonyl group containing 2 to 14 carbon atoms, most preferably the chain group ChB-4 with Z20 representing a phenylsulfonyl group, a para-nitrophenylsulfonyl group, a para-alkoxyphenylsulfonyl group wherein the alkoxy group contains 1 to 6 carbon atoms or a para-chlorophenylsulfonyl group.

Preferred nucleus groups A are shown in Table 1 without being limited thereto.

**Table 1**

| | |
|---|---|
| **NA-1** | 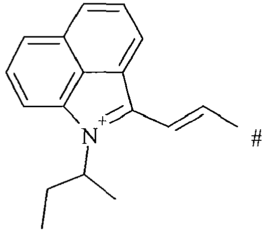 |
| **NA-2** | 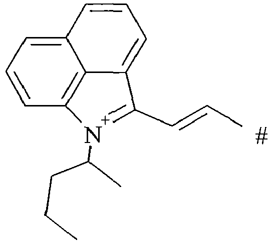 |
| **NA-3** | 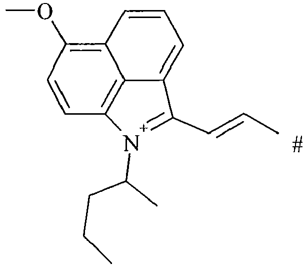 |
| **NA-4** | 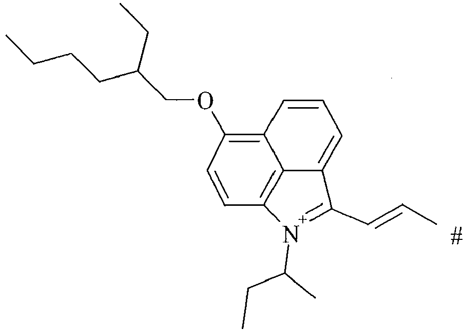 |
| **NA-5** | 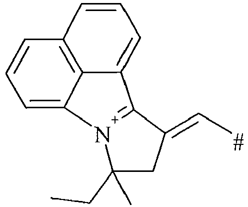 |
| **NA-6** | 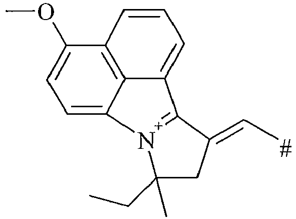 |
| **NA-7** | 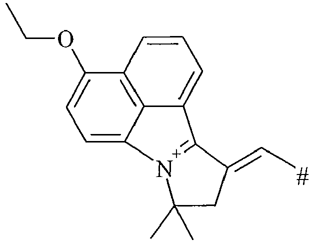 |
| **NA-8** | 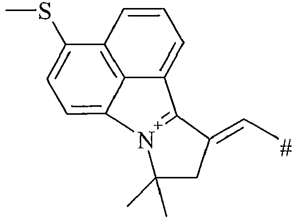 |
| **NA-9** | 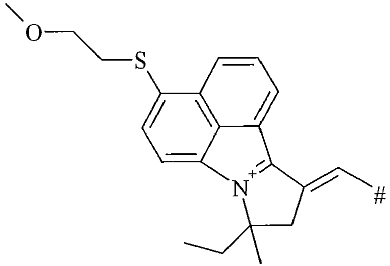 |
| **NA-10** | 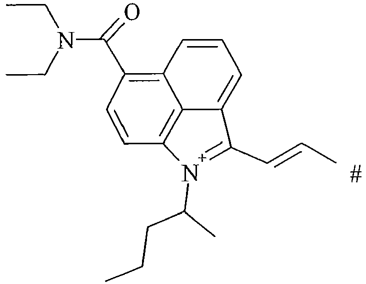 |
| **NA-11** | 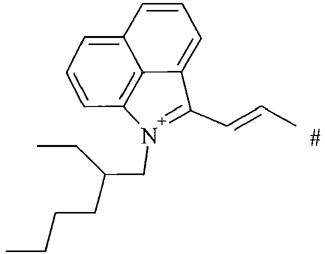 |
| **NA-12** | 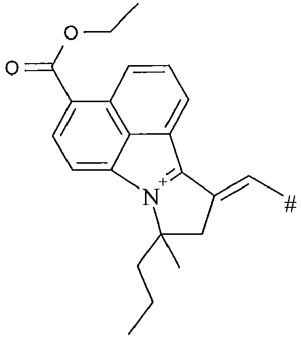 |
| **NA-13** | 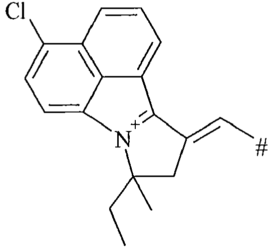 |
| **NA-14** | 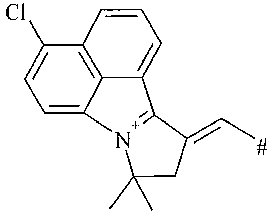 |
| **NA-15** | 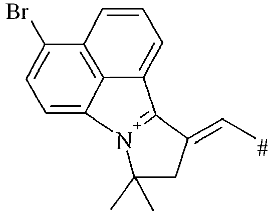 |
| **NA-16** | 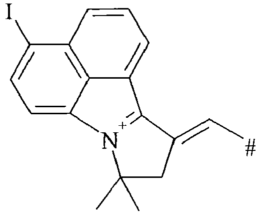 |
| **NA-17** | 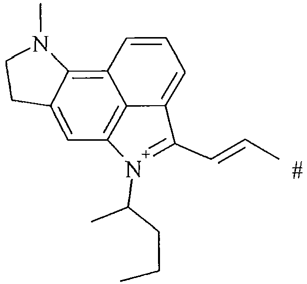 |
| **NA-18** | 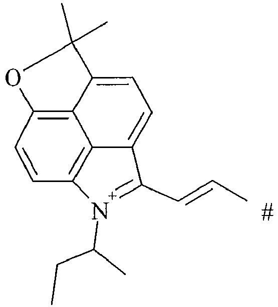 |
| **NA-19** | 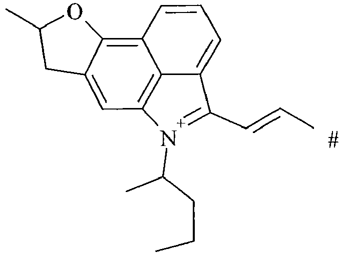 |
| **NA-20** | 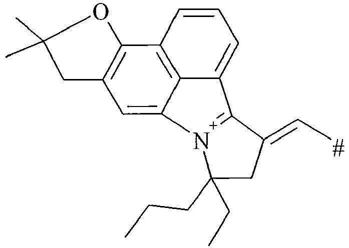 |
| **NA-21** | 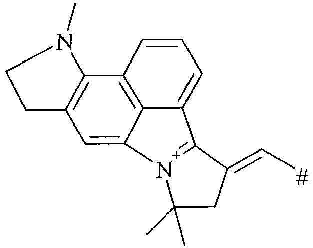 |
| **NA-22** | 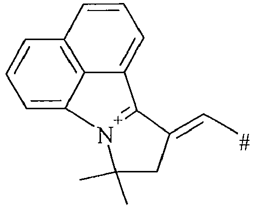 |
| **NA-23** | 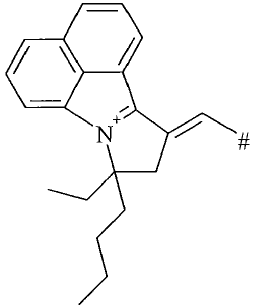 |
| **NA-24** | 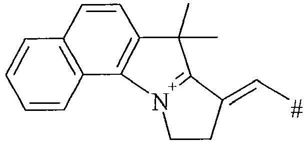 |

Preferred chain groups B are shown in Table 2 without being limited thereto.

**Table 2**

| | |
|---|---|
| **CB-1** | 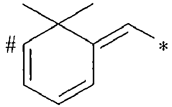 |
| **CB-2** | 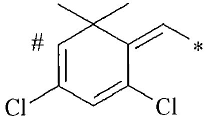 |
| **CB-3** | 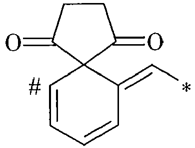 |
| **CB-4** | 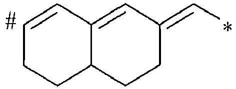 |
| **CB-5** | 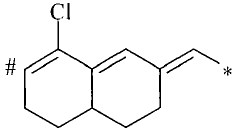 |
| **CB-6** | 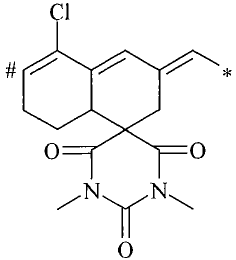 |
| **CB-7** | 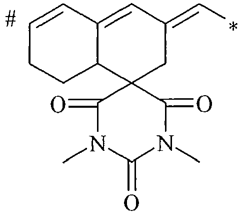 |
| **CB-8** | 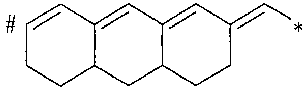 |
| **CB-9** | 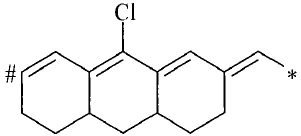 |
| **CB-10** | 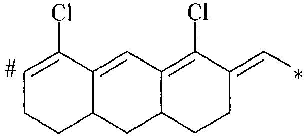 |
| **CB-11** | 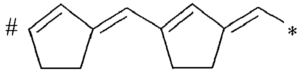 |
| **CB-12** | 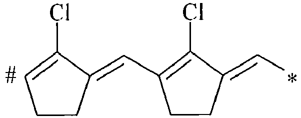 |
| **CB-13** | 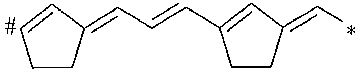 |
| **CB-14** | 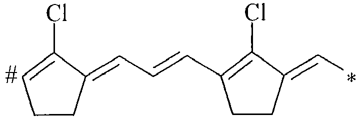 |
| **CB-15** | 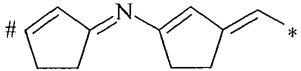 |
| **CB-16** | 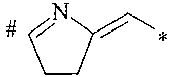 |
| **CB-17** | 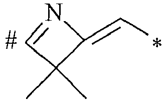 |
| **CB-18** | 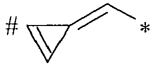 |
| **CB-19** | 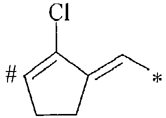 |
| **CB-20** | 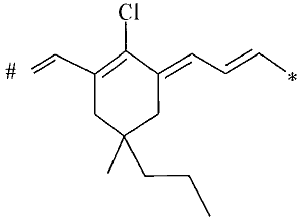 |
| **CB-21** | 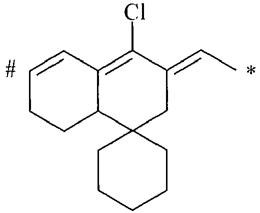 |
| **CB-22** | 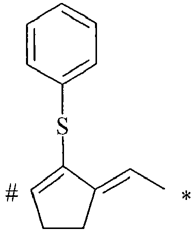 |
| **CB-23** | 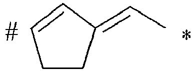 |
| **CB-24** | 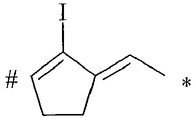 |
| **CB-25** | 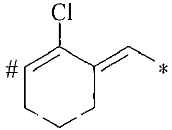 |
| **CB-26** | 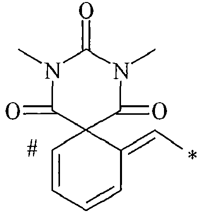 |
| **CB-27** | 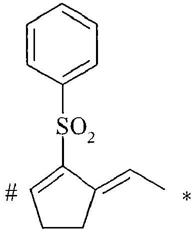 |
| **CB-28** | 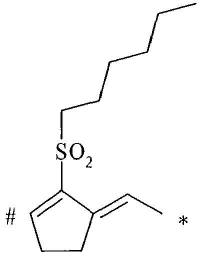 |
| **CB-29** | 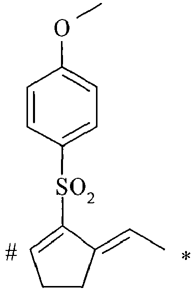 |
| **CB-30** | 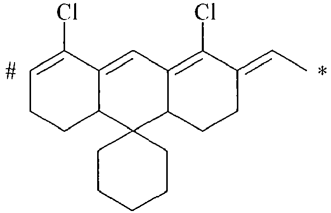 |

Preferred nucleus groups C are shown in Table 3 without being limited thereto.

**Table 3**

| | |
|---|---|
| **NC-1** | 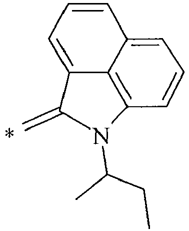 |
| **NC-2** | 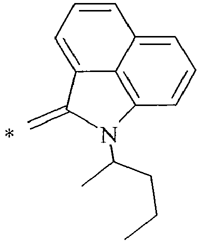 |
| **NC-3** | 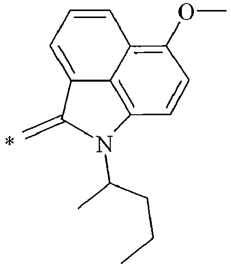 |
| **NC-4** | 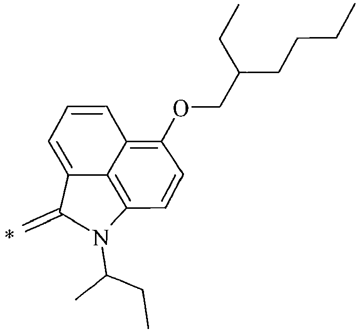 |
| **NC-5** | 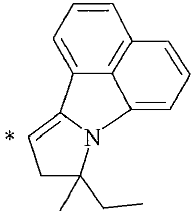 |
| **NC-6** | 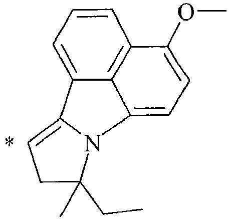 |
| **NC-7** | 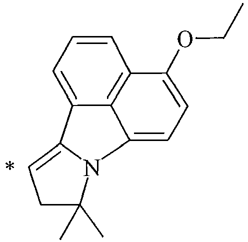 |
| **NC-8** | 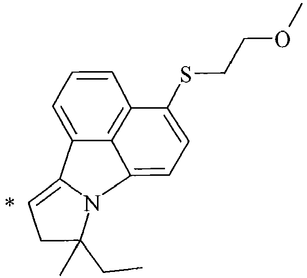 |
| **NC-9** | 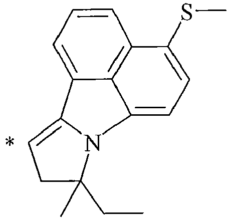 |
| **NC-10** | 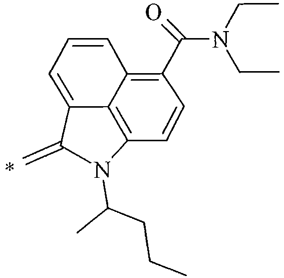 |
| **NC-11** | 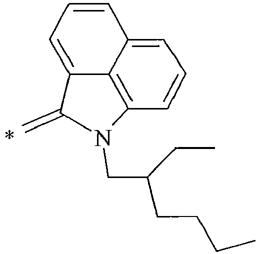 |
| **NC-12** | 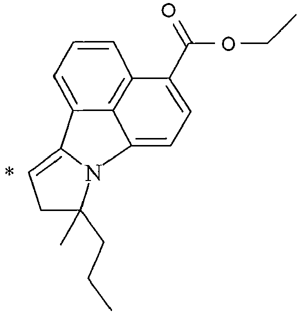 |
| **NC-13** | 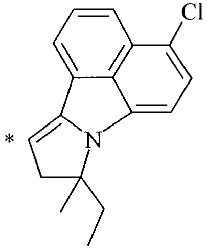 |
| **NC-14** | 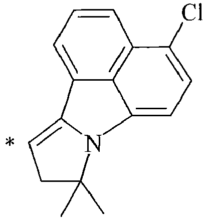 |
| **NC-15** | 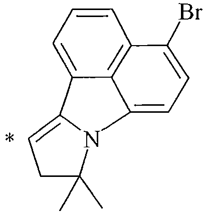 |
| **NC-16** | 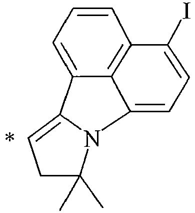 |
| **NC-17** | 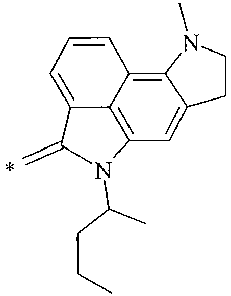 |
| **NC-18** | 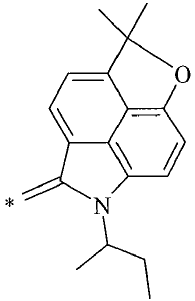 |
| **NC-19** | 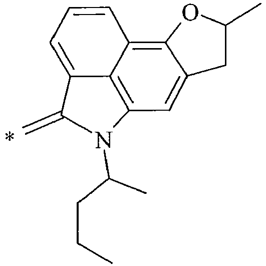 |
| **NC-20** | 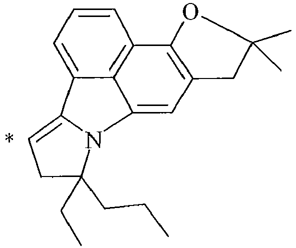 |
| **NC-21** | 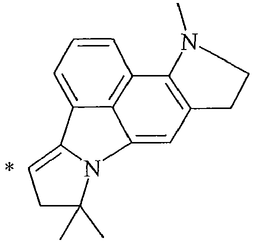 |
| **NC-22** | 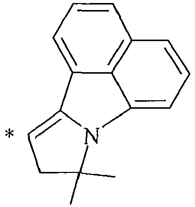 |
| **NC-23** | 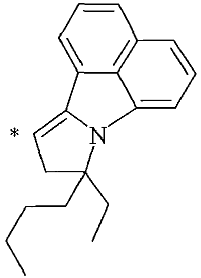 |
| **NC-24** | 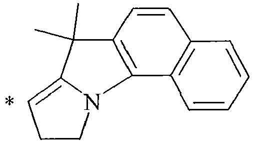 |

The synthesis of the infrared dye having a chemical structure A-B-C is well-known for a person skilled in the art of synthesizing dyes. For the sake of clarity, the method of synthesis is exemplified in Example 1 here below.

The infrared dye is preferably present in the colour forming layer in an amount of 0.01 to 1.0 g/m², more preferably in an amount of 0.02 to 0.5 g/m² and most preferably in an amount of 0.05 to 0.2 g/m². An amount of less than 0.01 g/m² requires a too high laser power and an amount of more than 0.5 g/m² may result in background discolouration.

### Laser Markable Layers

A laser markable layer contains an infrared dye for the conversion of electromagnetic radiation into heat when the layer is laser marked by the infrared laser.

The laser markable layer includes the above infrared dye having a chemical structure A-B-C.

In one embodiment, the laser markable layer is a so-called black & white laser markable layer, wherein the black colour is produced by carbonization of material in the layer due to extensive local heating with a laser having a laser wavelength within ± 30 nm of the absorption maximum in the infrared region λₘₐₓ(IR) of the infrared dye.

In a more preferred embodiment, the laser markable layer is a so-called colour laser markable layer wherein a colour is produced by a chemical reaction converting a substantially colourless compound into a dye, wherein the chemical reaction is triggered by local heating with a laser having a laser wavelength within a range of ± 30 nm of the absorption maximum in the infrared region λₘₐₓ(IR) of the infrared dye. The infrared dye not only delivers the heat for the colour forming action, but also has the advantage that there is no or minimal absorption in the visible spectrum and thus there is no or minimal interference with the colour formed by the laser markable layer. This also allows having a pure white background as desired in e.g. a security document.

A colour laser markable layer preferably includes at least a leuco dye, an infrared dye and a polymeric binder. The polymeric binder preferably includes vinyl acetate and at least 85 wt% of vinyl chloride based on the total weight of the polymeric binder.

The laser markable layer can be coated onto a support by any conventional coating technique, such as dip coating, knife coating, extrusion coating, spin coating, slide hopper coating and curtain coating. Preferably the laser markable layer is coated with a slide hopper coater or a curtain coater, more preferably coated onto a transparent polymeric support including a subbing layer.

The dry thickness of the laser markable layer is preferably between 4 and 40 g/m², more preferably between 5 and 25 g/m², and most preferably between 6 and 15 g/m².

### Laser Markable Articles

The laser markable article according to the invention includes at least one laser markable layer with the above infrared dye having a chemical structure A-B-C.

In a preferred embodiment, the laser markable layer with the above infrared dye having a chemical structure A-B-C is present on both sides of an opaque core support, preferably an opaque white core support, of the laser markable article. This is exemplified in Figure 2.

In a preferred embodiment, the laser markable article is a laser markable laminate including a laser markable layer with the above infrared dye having a chemical structure A-B-C on a transparent polymeric support selected from the group consisting of an axially stretched polyethylene terephthalate support, a biaxially stretched polyethylene terephthalate support, an axially stretched polyethylene naphthalate support and a biaxially stretched polyethylene naphthalate support. The advantage of having a transparent polymeric support is that the laser markable layer can be protected against physical scratches since it can be laser marked through the transparent polymeric support.

The laser markable article may contain on the same side of the core support as the laser markable layer, at least a second laser markable layer capable of forming a different colour.

The laser markable article according to present invention preferably contains three or more laser markable layers having different infrared dyes and also different leuco dyes on the same side of an opaque core support for producing a multi-coloured article. The different infrared dyes have an absorption maximum in the infrared region which differs preferably by at least 60 nm, more preferably at least 80 nm and most preferably at least 90 nm.

A laser markable article having three such laser markable layers is shown in Figure 3, where a laser markable laminate 31 including a laser markable layer 35 on a transparent polymeric support 34, an adhesive foil 39, and a laser markable laminate 32 including laser markable layers 37 and 38 on a transparent polymeric support 36 are simultaneously laminated on an opaque core support 33. The advantage of a simultaneous lamination is not only advantageous for economic reasons but may also result in less background discoloration during a hot lamination process which usually involves temperatures above 100°C for several minutes. The adhesive foil 39 can be a hot melt foil that ensures adhesion between the laser markable laminates 31 and 32. In stead of an adhesive foil 39, alternatively an adhesive layer is present on one or both of the laser markable layers 35 and 37. Other possibilities for ensuring adhesion may be employed such as e.g. a transparent polymeric support having on both sides adhesive layers. However for certain applications like ID cards having a format as specified by ISO 7810, adhesive solutions having minimal thickness allow the inclusion of further security features such as holograms and the like.

In a preferred embodiment, the laser markable article is a security document precursor having a format as specified by ISO 7810. ISO 7810 specifies three formats for identification documents: ID-1 with the dimensions 85.60 mm x 53.98 mm, and a thickness of 0.76 mm as specified in ISO 7813, as used for bank cards, credit cards, driving licences and smart cards; ID-2 with the dimensions 105 mm x 74 mm, as used in German identity cards, with typically a thickness of 0.76 mm; and ID-3 with the dimensions 125 mm x 88 mm, as used for passports and visa's. When the security cards include one or more contactless integrated circuits then a larger thickness is tolerated, e.g. 3 mm according to ISO 14443-1. In a more preferred embodiment, the laser markable article is a security document precursor including electronic circuitry, more preferably the electronic circuitry includes a RFID chip with an antenna and/or a contact chip. Inclusion of electronic circuitry makes forgery more difficult.

The laser markable article is preferably used for manufacturing a security document, preferably a security document selected from the group consisting of a passport, a personal identification card and a product identification document.

In another preferred embodiment, the laser markable article is a product identification document which is usually attached to the packaging material of the product or to the product itself. The product identification document not only allows verifying the authenticity of the product, but also allows maintaining the attractive look of a product (packaging).

In a preferred embodiment of the laser markable article as shown in Figure 3, the infrared dye having a chemical structure A-B-C and an infrared absorption maximum above 1100 nm, preferably above 1125 nm, more preferably above 1140 nm, and most preferably 1150 nm or more, is included in the laser markable layer 38, while a second infrared dye having a absorption maximum between 1000 nm and 1100 nm, preferably between 1030 nm and 1070 nm, is included in the laser markable layer 37; and a third infrared dye having a absorption maximum between 830 nm and 1000 nm, preferably between 850 nm and 950 nm is included in the laser markable layer 35. The absorption maxima of the three infrared dyes differ preferably by at least 60 nm, more preferably by at least 80 nm, and most preferably by at least 90 nm.

In a preferred embodiment of the laser markable article as shown in Figure 3, additional layers and/or security features are present on the same or the opposite side of the opaque core support 33.

The laser markable article is preferably to a large degree symmetrical or more preferably completely symmetrical. Completely symmetrical means that the same type and number of layers and foils are present on both sides of the opaque core support. The advantage thereof is that curl of the laser markable article is minimized. An asymmetrical laser markable article often exhibits curl and usually requires a thermal relaxation in order to obtain e.g. a flat asymmetrical ID card.

In a preferred embodiment, the laser markable article includes three colour laser markable layers on both sides of an opaque white core support. Preferably one of the three colour laser markable layers is capable of forming a cyan or blue colour image on lasermarking, while the two other laser markable layers are capable of forming a magenta colour or a yellow colour respectively or otherwise capable of forming a red colour or a green colour respectively. The advantage is that readily available colour management systems for producing colour images based on either a CMY or RGB colour reproduction can be used.

### Polymeric supports

The polymeric support for the laser markable layer is preferably a transparent polymeric support, preferably a transparent axially stretched polyester support. The colour forming layer may be coated directly on the polymeric support or on a subbing layer present on the polymeric support for improving adhesion of the laser markable layer, thereby making falsification through delamination more difficult.

Suitable polymeric supports include cellulose acetate propionate or cellulose acetate butyrate, polyesters such as polyethylene terephthalate and polyethylene naphthalate, polyamides, polycarbonates, polyimides, polyolefins, polyvinylchlorides, polyvinylacetals, polyethers and polysulphonamides.

In the most preferred embodiment, the transparent polymeric support is a biaxially stretched polyethylene terephthalate foil (PET-C foil) to be very durable and resistant to mechanical influences (flexion, torsion, scratches), chemical substances, moisture and temperature ranges. This is especially useful for security documents such as identification cards and credit cards for which the average daily usage has augmented substantially from less than 1 time per week to 4 times per day. The card body has to withstand not only this increased usage, but also the associated storage conditions. Cards are no longer safely tucked away in cabinets at home or seldomopened wallets, but are now loosely put away in pockets, purses, sport bags etc. - ready for immediate use. PVC (polyvinylchloride) is the most widely used material for plastic cards but has low durability of the card body, resulting in an effective lifetime of only 1-3 years, much lower than the lifetime of the often expensive electronic chips included in the card. Other materials like Teslin™ and ABS are only suitable for very low-end or single-use cards. PC (polycarbonate) can be used for longer-life and more secure ID cards, but has a high production cost and a low resistance to torsion, scratching and chemicals.

The support preferably is a single component extrudate, but may also be co-extrudate. Examples of suitable co-extrudates are PET/PETG and PET/PC (PC = polycarbonate).

Polyester supports and especially polyethylene terephthalate supports are preferred because of their excellent properties of dimensional stability. When polyester is used as the support material, a subbing layer is preferably employed to improve the bonding of layers, foils and/or laminates to the support.

The manufacturing of PET-C foils and supports is well-known to a person skilled in the art of preparing suitable supports for silver halide photographic films. For example, GB 811066 (ICI) teaches a process to produce biaxially oriented polyethylene terephthalate foils and supports.

The polyethylene terephthalate is preferably biaxially stretched with a stretching factor of at least 2.0, more preferably at least 3.0 and most preferably a stretching factor of about 3.5. The temperature used during stretching is preferably about 160°C.

Methods to obtain opaque polyethylene terephthalate and biaxially oriented films thereof have been disclosed in, e.g. US 2008238086 (AGFA) .

### Core Supports

The core support may be transparent, but is preferably a translucent or an opaque core support, more preferably an opaque core support preferably having a white or a pastel colour, most preferably a white colour, for allowing easily readable information or viewable colour image. The advantage of an opaque white core support is also that a colour image is more appealing since colours usually are more vibrant with a white background.

Preferred opaque white core supports include resin coated paper supports, such as polyethylene coated paper and polypropylene coated paper, and synthetic paper supports such as Synaps™ synthetic paper of Agfa-Gevaert NV.

Other examples of useful high-quality polymeric supports for the present invention include opaque white polyesters and extrusion blends of polyethylene terephthalate and polypropylene. Also Teslin™ may be used as support.

Instead of a white support, a white opacifying layer can be coated onto a transparent polymeric support, such as those disclosed above. The opacifying layer preferably contains a white pigment with a refractive index greater than 1.60, preferably greater than 2.00, and most preferably greater than 2.60. The white pigments may be employed singly or in combination. Suitable white pigments include C.I. Pigment White 1, 3, 4, 5, 6, 7, 10, 11, 12, 14, 17, 18, 19, 21, 24, 25, 27, 28 and 32. Preferably titanium dioxide is used as pigment with a refractive index greater than 1.60. Titanium oxide occurs in the crystalline forms of anatase type, rutile type and brookite type. In the present invention the rutile type is preferred because it has a very high refractive index, exhibiting a high covering power.

### Subbing Layers

The polymeric support and opaque core support may be provided with one or more subbing layers. This has the advantage that the adhesion between the laser markable layer and the support is improved.

Useful subbing layers for this purpose are well known in the photographic art and include, for example, polymers of vinylidene chloride such as vinylidene chloride/acrylonitrile/acrylic acid terpolymers or vinylidene chloride/methyl acrylate/itaconic acid terpolymers.

The application of subbing layers is well-known in the art of manufacturing polyester supports for silver halide photographic films. For example, the preparation of such subbing layers is disclosed in US 3649336 (AGFA) , GB 1441591 (AGFA) and EP 2374602 A (AGFA).

Suitable vinylidene chloride copolymers include: the copolymer of vinylidene chloride, N-tert.-butylacrylamide, n-butyl acrylate, and N-vinyl pyrrolidone (e.g.70:23:3:4), the copolymer of vinylidene chloride, N-tert.-butylacrylamide, n-butyl acrylate, and itaconic acid (e.g. 70:21:5:2), the copolymer of vinylidene chloride, N-tert.-butylacrylamide, and itaconic acid (e.g. 88:10:2), the copolymer of vinylidene chloride, n-butylmaleimide, and itaconic acid (e.g. 90:8:2), the copolymer of vinyl chloride, vinylidene chloride, and methacrylic acid (e.g. 65:30:5), the copolymer of vinylidene chloride, vinyl chloride, and itaconic acid (e.g. 70:26:4), the copolymer of vinyl chloride, n-butyl acrylate, and itaconic acid (e.g. 66:30:4), the copolymer of vinylidene chloride, n-butyl acrylate, and itaconic acid (e.g. 80:18:2), the copolymer of vinylidene chloride, methyl acrylate, and itaconic acid (e.g.90:8:2), the copolymer of vinyl chloride, vinylidene chloride, N-tert.-butylacrylamide, and itaconic acid (e.g. 50:30:18:2). All the ratios given between brackets in the above-mentioned copolymers are ratios by weight.

In a preferred embodiment, the subbing layer has a dry thickness of no more than 2 µm, preferably no more than 200 mg/m².

### Adhesive Foils

In one embodiment, the adhesive is applied as a layer on top of a colour laser markable layer. However, the use of an adhesive foil instead of an adhesive layer has some advantages. A first advantage is that an adhesive foil does not extract some of the more soluble ingredients in the laser markable layer like an adhesive layer can do upon coating and drying. Variation in the concentration of the soluble ingredients leads to inconsistencies in the colour production during laser marking. A second advantage is that the same colour laser markable laminates can be combined with different types of security features interlaminated between two colour laser markable layers (e.g. 35 and 37 in Figure 3) by selecting an adhesive foil, if necessary, for optimal adhesion depending on the type of security feature used.

Suitable adhesive foils include pressure-sensitive and thermo-sensitive adhesive foils. A range of so-called hot melt foils are well-known to one skilled in the art of security films and security documents.

A preferred hot melt foil in the present invention is a polyurethane foil. Suitable commercially available hot melt foils include Platilon™ ID5051, a 35 µm polyurethane foil available from Epurex. Other suitable hot melt foils are Scapa™ Thermofoil G160 and G161.

Another preferred adhesive foil is PETG. Contrary to biaxially oriented polyethylene terephthalate, a non-oriented PETG foil softens rapidly near the glass transition temperature and can thus also be used for adhesive purposes.

Other adhesive foils usable in a preferred embodiment of the invention include polyester, polyester urethane, polyether urethane or polyolefin hot melt foils.

If the adhesive is applied as an adhesive layer on a colour laser markable layer or on a polymeric support, this may be performed by methods such as solvent coating, casting, or hot melt extrusion.

Suitable thermo adhesive compositions are disclosed in WO 2009/063058 (AGFA) . Preferred thermo adhesive layers are based on a hydroxyl-functional, partially-hydrolyzed vinyl chloride/vinyl acetate resin such as, for example, available under the trade name of UCAR(TM) VAGD Solution vinyl resin from Dow Chemical Company,

### Leuco Dyes

A leuco dye is a compound which changes from essentially colourless to coloured when heated, e.g. by laser marking. A number of classes of leuco dyes are preferred for the laser markable layer of the present invention, for example: azines such as oxazines, diazines and thiazines; triarylmethanes such as fluoresceins, rhodamines and rhodols; ketazines; barbituric acid leuco dyes and thiobarbituric acid leuco dyes.

The leuco dye is preferably present in the laser markable layer in an amount of 0.5 to 5.0 g/m², more preferably in an amount of 1.0 to 3.0 g/m².

The following reaction mechanisms and leuco dyes are suitable to form a coloured dye.

### 1. Fragmentation of a Leuco Dye

The reaction mechanism can be represented by:

Leuco dye-FG → Dye

wherein FG represents a fragmenting group.

A preferred leuco dye (CASRN104434-37-9) is shown in EP 174054 A (POLAROID) which discloses a thermal imaging method for forming colour images by the irreversible unimolecular fragmentation of one or more thermally unstable carbamate moieties of an organic compound to give a visually discernible colour shift from colourless to coloured.

The fragmentation of a leuco dye may be a two-step reaction mechanism represented by:

Leuco-dye-FG → [Leuco-dye] → Coloured Dye

wherein FG represents a fragmenting group.

The fragmentation of a leuco dye may be catalyzed or amplified by acids and acid generating agents. The leuco dyes G-(1) to G-(17) disclosed by US 6100009 (FUJI) are catalyzed or amplified by polymeric acid generating agents based on A-(1) to A-(52), which are also suitable as acid generating agents in the present invention.

### 2. Protonation of a Leuco Dye after Fragmentation of a H-donor-precursor

The reaction mechanism can be represented by:

Leuco-dye + H-donor-FG → Leuco-dye + H-donor → Coloured Dye

wherein FG represents a fragmenting group.

A preferred H-donor-FG compound includes an ester group as part of its chemical structure (the rest of the compound is represented by the group T) which by laser heating forms a carboxylic acid group:

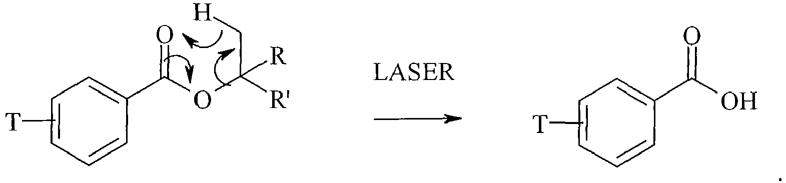

A more preferred H-donor-precursor includes a carbonate group, e.g. a tBOC group, as part of its chemical structure (the rest of the compound is represented by the group T) which by laser heating forms a phenol group:

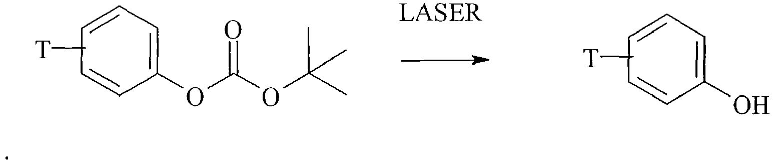

Preferred carbonate groups are given on page 8 of EP 605149 A (JUJO PAPER) . In a preferred embodiment, the H-donor-FG compound contains 2 carbonate groups.

The most preferred H-donor-FG compound is: 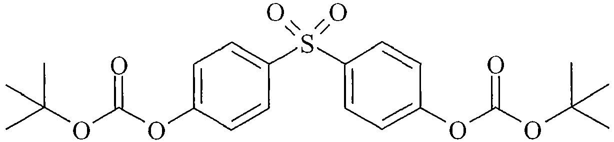 HDP.

The synthesis of compound HDP (CASRN 129104-70-7) is given on page 31 of EP 605149 A (JUJO PAPER) for the compound (19).

In addition to the H-donor, the fragmentation of the H-donor-FG compound above also leads to the formation of a compound having a melting temperature lower than room temperature (20°C). The formation of such a compound can be used as an additional security feature. After laser marking a laser markable article through a polymeric support, such as a biaxially stretched polyethylene terephthalate polymeric foil, the compound having a melting temperature lower than room temperature may disturb a second laser marking (falsification of a security document) by the formation of visible blisters.

### 3. Protonation of a Leuco Dye after a Re-arrangement in a H-donor-precursor

The reaction mechanism can be represented by:

Leuco-dye + H-donor-RG → Leuco-dye + H-donor → Coloured Dye

wherein RG represents a rearranging group.

A preferred H-donor-RG compound is capable of forming a compound having an allyl substituted phenol group as part of its chemical structure (the rest of the compound is represented by the group T) by laser heating:

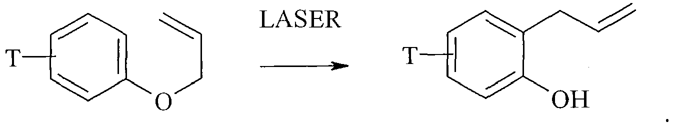

Preferred H-donor-RG compounds include 4,4'-diallyloxy diphenylsulfone whereof the synthesis is disclosed by EP 1452334 A (RICOH) .

In contrast to the H-donor-FG compound of reaction mechanism 2, no compound having a melting temperature lower than room temperature (20°C) is produced by the rearrangement of the H-donor-precursor to a hydrogen donor.

The colour formation according to the mechanisms 2 and 3 above are two-component reactions involving a leuco dye and a hydrogen donor-precursor, i.e. a 'H-donor-FG compound' or 'H-donor-RG compound' , while the first reaction mechanism is an one-component reaction. The advantage of using a two-component reaction for the colour formation is that the stability, especially the shelf-life stability, can be enhanced. The probability of undesired colour formation due to environment heating is decreased by going from a single step reaction to a two step reaction involving the formation of the H-donor followed by a reaction of the formed H-donor with the leuco dye.

The preferred colour formation mechanism is the protonation of a leuco dye after fragmentation of the H-donor since it includes both advantages of the blister formation security feature and the enhanced shelf-life stability.

In a preferred embodiment of the laser markable layer, a combination is used of 4,4'-Bis(tert-butoxycarbonyloxy)diphenylsulfone (CASRN 129104-70-7) as the H-donor-FG compound with the leuco dye crystal violet lactone (CASRN 1552-42-7) for producing a blue colour.

In a preferred embodiment of a laser markable layer for producing a cyan colour, the cyan colour forming compound has a structure according to Formula CCFC:

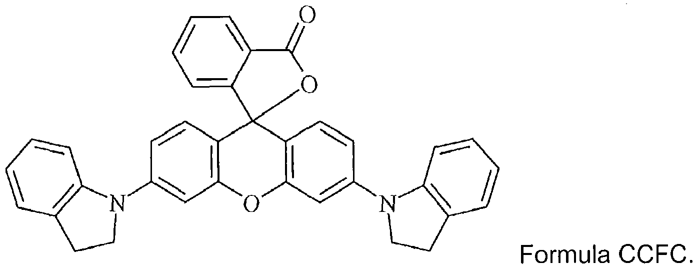

In a preferred embodiment of a laser markable layer for producing a magenta colour, the magenta colour forming compound has a structure according to Formula MCF: 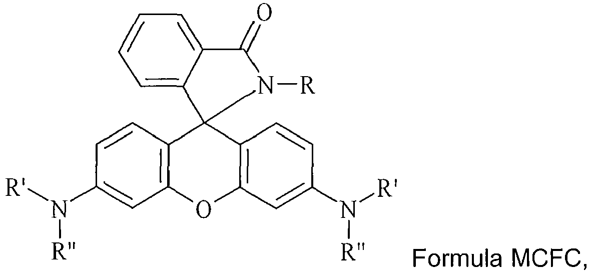 wherein R, R', R" are independently selected from the group consisting of hydrogen, a linear alkyl group, a branched alkyl group, an aryl and aralkyl group; or R' and R" are linked to form a heterocyclic ring.

In one embodiment, the magenta colour forming compound has a structure according to Formula MCFC, the R, R', R" may independently represent a linear alkyl group, a branched alkyl group, an aryl or an aralkyl group substituted by at least one functional group containing an oxygen atom, a sulphur atom or a nitrogen atom.

Particularly preferred magenta colour forming compounds include the compounds M-1 to M-6 of Table 4.

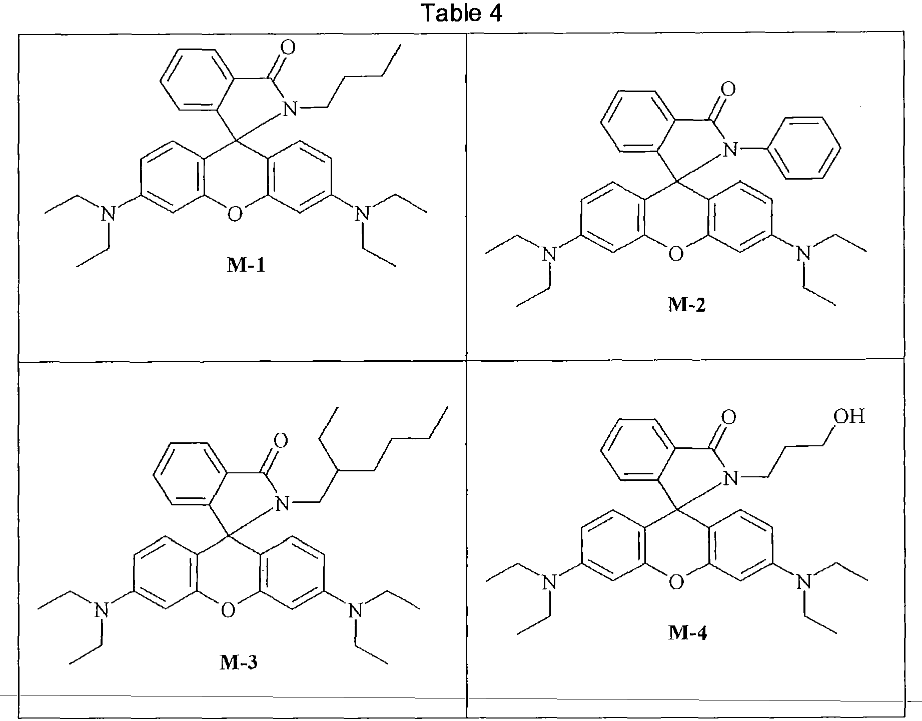

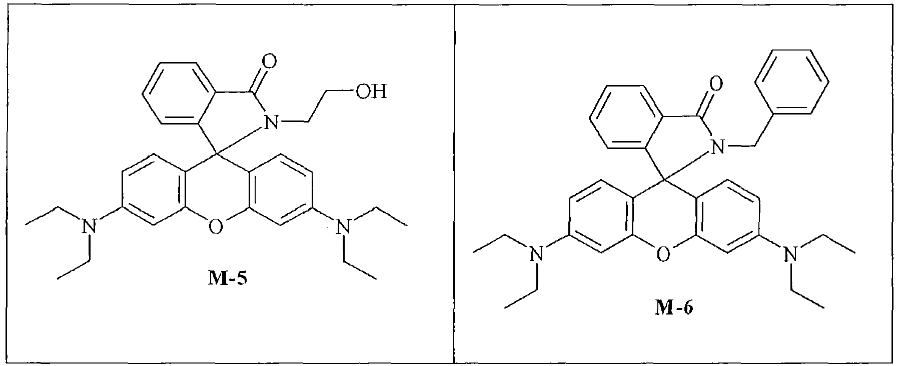

In a very preferred embodiment of a laser markable layer for producing a magenta colour, the magenta colour forming compound has a structure according to Formula MCFC2:

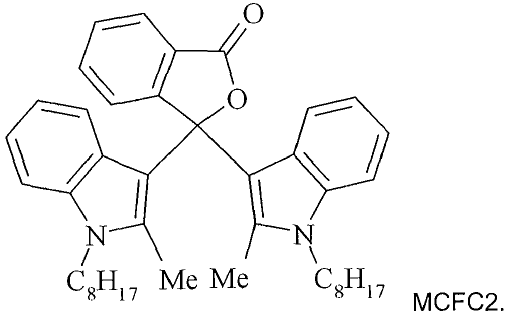

In a preferred embodiment of a laser markable layer for producing a red colour, the red colour forming compound has a structure according to Formula RCFC:

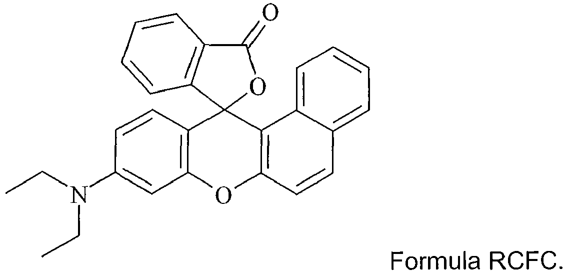

In a preferred embodiment of a laser markable layer for producing a yellow colour, the yellow colour forming compound has a structure according to Formula YCFC: 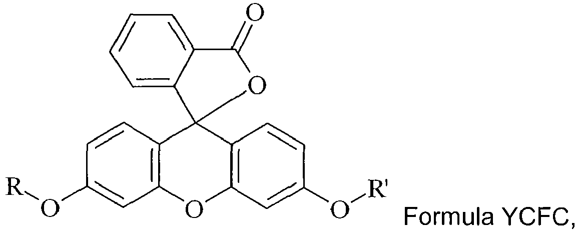 wherein R, R' are independently selected from a group consisting of a linear alkyl group, a branched alkyl group, an aryl and aralkyl group.

In one embodiment, the yellow colour forming compound has a structure according to Formula YCFC, wherein R and R' independently represent a linear alkyl group, a branched alkyl group, an aryl or an aralkyl group substituted by at least one functional group containing an oxygen atom, a sulphur atom or a nitrogen atom.

A particularly preferred yellow colour forming compound is the compound according to Formula YCFC wherein both R and R' are methyl.

The leuco dye is preferably present in the laser markable layer in an amount of 0.01 to 2.0 g/m², more preferably in an amount of 0.1 to 1.0 g/m².

### Polymeric Binders

The laser markable layer includes a polymeric binder. There is no real limitation on the type of polymeric binder for so far it allows colour formation.

If the laser markable layer produces a black colour through carbonization of the polymeric binder then the polymeric binder is preferably selected from polycarbonate (PC), polybutylene terephthalate (PBT), polyvinyl chloride (PVC), polystyrene (PS) and copolymers thereof, such as e.g. aromatic polyester-carbonate, styrene acrylonitrile and acrylonitrile butadiene styrene (ABS).

For colour laser marking, the laser markable layer preferably includes a polymeric binder comprising vinyl acetate and at least 85 wt% of vinyl chloride based on the total weight of the binder. Particularly preferred polymeric binders are disclosed in EP 2463110 A (AGFA) .

The polymeric binder in the laser markable layer is preferably a copolymer including at least 85 wt% of a vinyl chloride and 1 wt% to 15 wt% of vinyl acetate, more preferably a copolymer including at least 90 wt% of a vinyl chloride and 1 wt% to 10 wt% of vinyl acetate with all wt% based on the total weight of the binder.

In a preferred embodiment, the polymeric binder includes at least 4 wt% of vinyl acetate based on the total weight of the binder. The advantage of having at least 4 wt% of vinyl acetate in the polymeric binder is that the solubility of the polymeric binder is drastically improved in preferred coating solvents, such as methyl ethyl ketone.

In a more preferred embodiment, the polymeric binder consists of vinyl chloride and vinyl acetate.

The polymeric binder is preferably present in the laser markable layer in an amount of 3 to 30 g/m², more preferably in an amount of 5 to 20 g/m².

### Other Infrared Dyes

When multicoloured articles are desired, then the laser markable article includes a plurality of colour laser markable layers containing different infrared dyes and colour forming compounds. The infrared dyes differ in wavelength of maximum absorption λₘₐₓ so that they can be addressed by different infrared lasers with corresponding emission wavelengths causing colour formation only in the colour laser markable layer of the addressed infrared dye.

Suitable examples of infrared dyes include, but are not limited to, polymethyl indoliums, metal complex IR dyes, indocyanine green, polymethine dyes, croconium dyes, cyanine dyes, merocyanine dyes, squarylium dyes, chalcogenopyryloarylidene dyes, metal thiolate complex dyes, bis(chalcogenopyrylo)polymethine dyes, oxyindolizine dyes, bis(aminoaryl)polymethine dyes, indolizine dyes, pyrylium dyes, quinoid dyes, quinone dyes, phthalocyanine dyes, naphthalocyanine dyes, azo dyes, (metalized) azomethine dyes and combinations thereof.

In a preferred embodiment of a laser markable article producing multicoloured articles as e.g. shown in Figure 3, the infrared dye having a absorption maximum between 830 nm and 1000 nm and included in the laser markable layer 35 is preferably an infrared dye selected from the group consisting of quinoline dyes, indolenine dyes, especially benzo[e]indolenine dyes, and benzo[f]indolenine dyes.

In a preferred embodiment of a laser markable article producing multicoloured articles as e.g. shown in Figure 3, the infrared dye having a absorption maximum between 1000 nm and 1100 nm and included in the laser markable layer 37 is preferably an infrared dye selected from the group consisting of quinoline dyes, indolenine dyes, especially a benzo[cd]indoline dye. A particular preferred infrared dye is 5-[2,5-bis[2-[1-(1-methylbutyl)benz[cd]indol-2(1H)-ylidene]ethylidene]cyclopentylidene]-1-butyl-3-(2-methoxy-1-methylethyl)-2,4,6(1H,3H,5H)-pyrimidinetrione (CASRN 223717-84-8), which has an absorption maximum λₘₐₓ of 1052 nm making it very suitable for a Nd-YAG laser having an emission wavelength of 1064 nm.

The infrared dyes are preferably present in the laser markable layer in an amount of 0.01 to 1.0 g/m², more preferably in an amount of 0.02 to 0.5 g/m².

### Thermal Acid Generating Compounds

The fragmentation of a leuco dye in a laser markable layer according to the present invention may be catalyzed or amplified by acids and acid generating agents.

Suitable thermal acid generating agents may be the polymeric acid generating agents based on the ethylenically unsaturated polymerizable compounds A-(1) to A-(52) disclosed by US 6100009 (FUJI).

Suitable non-polymeric acid generating agents are, for example, the compounds E-(1) to E-(90) disclosed by US 6100009 (FUJI) lacking the ethylenically unsaturated polymerizable group.

The thermal acid generating agent is preferably present in the amount of 1 to 20 wt%, more preferably 5 to 15 wt% based on the total dry weight of the laser markable layer.

### Stabilizers

A colour laser markable layer, preferably the outermost colour laser markable layer, includes in a preferred embodiment according to the present invention at least one stabilizer, preferably a UV stabilizer.

Suitable commercially available stabilizers include 6-O-palmitoyl-L-ascorbic acid (CASRN137-66-6) from BASF; TOCOBLEND™ L70 IP (CASRN1406-66-2) from VITABLEND NEDERLAND BV; gallic acid ethyl ester (CASRN831-61-8) from ACROS; 3,6-dithia-1,8-octanediol (CASRN5244-34-8) from ALDRICH; Irganox™ 1035 (CASRN41484-35-9) from CIBA; ADK STAB PEP36 (CASRN80693-00-1) from PALMAROLE; calcium stearate; Tinuvin™ 292 (CASRN 41556-26-7), Tinuvin™ 400 (CASRN 192662-79-6), Tinuvin™ P (CASRN2440-22-4), Tinuvin™ 1130 (CASRN 104810-48-2) and Tinuvin™ 123 (CASRN 122586-52-1) from BASF; Irgastat™P 18 (CASRN401844-75-5) from CIBA; 1-dibutylacetamido-mercaptotetrazole (CASRN 168612-06-4) from Chemosyntha; 1-(3,4-dichlorophenyl)-1,2-dihydro-5H-tetrazole-5-thione (CASRN63684-99-1) from NOVASEP; CYASORB™ UV1164 (CASRN2725-22-6) from CYTEC INDUSTRIES BV; Tinuvin™ 400 (CASRN 192662-79-6); 2-(2,4-dihydroxyphenyl)-4,6-bis-(2,4-dimethylphenyl)-s-triazine (CASRN1668-53-7) from Capot Chemical Ltd; 4-[4,6-bis(2-methylphenoxy)-1,3,5-triazin-2-yl]- 1,3-benzenediol (CASRN 13413-61-1); Mixxim™ BB/100 (CASRN 103597-45-1) from FAIRMOUNT; Hostavin™ 3225-2 DISP XP from CLARIANT; and other benzotriazole and benzophenone compounds.

Particularly preferred stabilizers include a phenol stabilizer sterically hindered by a ring containing three nitrogen atoms represented by Formula (Stabi-I): 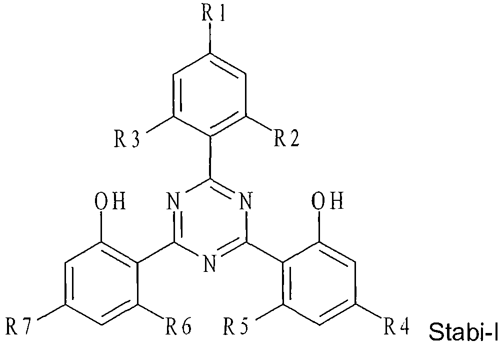 or Formula (Stabi-II): 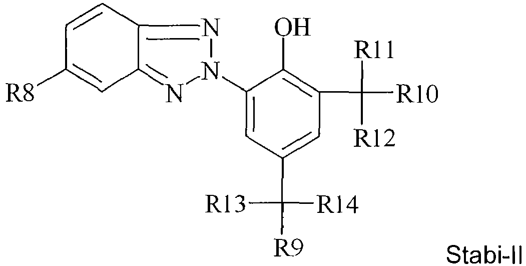 wherein
R1 to R7 is each independently selected from the group consisting of hydrogen, an alkyl group containing 1 to 12 carbon atoms and an alkoxy group containing 1 to 12 carbon atoms;
R8 represents hydrogen or a halogen atom;
R9 and R10 is each independently selected from the group consisting of hydrogen, an alkyl group containing 1 to 6 carbon atoms and an aryl group containing 1 to 12 carbon atoms; and
R11 to R14 is each independently selected from the group consisting of an alkyl group containing 1 to 6 carbon atoms.

In a preferred embodiment, R1 to R7 is each independently selected from the group consisting of hydrogen, an alkyl group containing 1 to 8 carbon atoms, more preferably an alkyl group containing 1 to 6 carbon atoms, and an alkoxy group containing 1 to 8 carbon atoms, more preferably an alkoxy group containing 1 to 6 carbon atoms.

In a preferred embodiment, R9 and R10 is each independently selected from the group consisting of hydrogen, an alkyl group containing 1 to 8 carbon atoms, more preferably an alkyl group containing 1 to 6 carbon atoms, and an aryl group containing 1 to 12 carbon atoms, more preferably an alkyl group containing 1 to 10 carbon atoms.

In a preferred embodiment ,R5 and R6 both represent hydrogen.

In a preferred embodiment, R11 to R14 all represent methyl and preferably R9 and/or R10 represent methyl or phenyl.

In a preferred embodiment, R8 represents a chlorine atom.

In a preferred embodiment, R9 and/or R10 represent a phenyl substituted by an alkyl group or a napthyl group.

In a particularly preferred embodiment, the colour laser markable laminate includes a phenol stabilizer sterically hindered by a ring containing three nitrogen atoms and is selected from the group consisting of IS-1 to IS-4.

**Table 5**

| | |
|---|---|
| IS-1 | 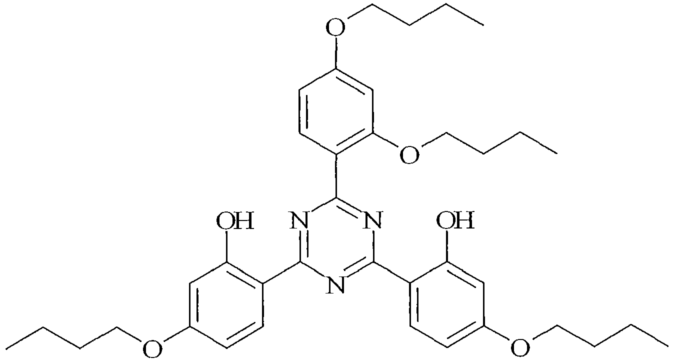 |
| IS-2 | 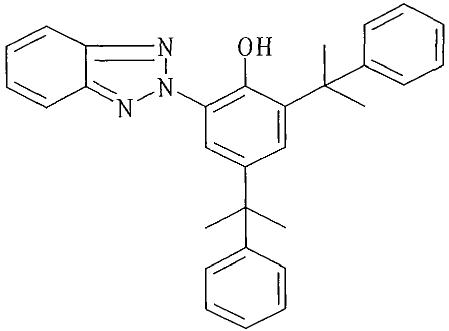 |
| IS-3 | 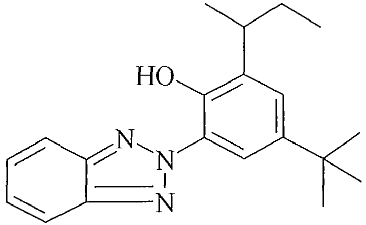 |
| IS-4 | 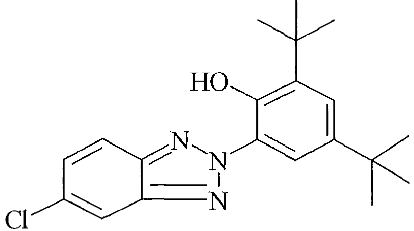 |

The stabilizer is preferably present in the laser markable layer, but may also be present in another layer, for example, an outer layer. An outer layer is a layer more distant from the opaque core support than the laser markable on the same side of the opaque core support.

### Coating Solvents

For coating the laser markable layer, one or more organic solvents may be used. The use of an organic solvent facilitates the dissolution of the polymeric binder and specific ingredients such as the infrared dye.

A preferred organic solvent is methylethylketone (MEK) because it combines a high solubilizing power for a wide range of ingredients and it provides, on coating the colour forming layer, a good compromise between the fast drying of the layer(s) and the danger of fire or explosion thereby allowing high coating speeds.

### Laser Marking Methods

A preferred embodiment of the present invention is a method of laser marking an laser markable article as disclosed above, which includes a laser markable layer containing an infrared dye having a chemical structure A-B-C, by an infrared laser having an emission wavelength between 1130 nm and 1200 nm.

In a more preferred embodiment of the method of laser marking, the article is further laser marked by an infrared laser having an emission wavelength between 1020 nm and 1080 nm and/or by an infrared laser having an emission wavelength between 830 nm and 940 nm.

In a preferred embodiment of the laser marking method, the laser markable layer is laser marked through a transparent biaxially stretched polyethylene terephthalate foil (PET-C). This PET-C foil is preferably used as support for the laser markable layer.

### Security Features

The colour laser markable laminates and articles are preferably combined with one or more security features to increase the difficulty for falsifying the document.

To prevent forgeries of identification documents, different means of securing may be used. One solution consists in superimposing lines or guilloches on an identification picture such as a photograph. Other solutions consist in adding security elements such as information printed with ink that reacts to ultraviolet radiation, micro-letters concealed in an image or text etc.

Suitable other security features such as anti-copy patterns; guilloches; line patterns; endless text; miniprint; microprint; nanoprint; rainbow colouring; barcodes including 2D-barcodes; coloured fibres; fluorescent fibres and planchettes; fluorescent pigments including fluorescent hi-lites; OVD (Optically Variable Device) and DOVID (Diffractive Optically Variable Image Device) such as holograms, 2D and 3D holograms, holograms with kinematic effects like Kinegrams™; overprint; relief embossing; perforations; metallic pigments; magnetic material; metameric colours; microchips such as RFID chips; images made with OVI (Optically Variable Ink) such as iridescent and photochromic ink; images made with thermochromic ink; phosphorescent pigments and dyes; watermarks including single tone, duotone and multitone watermarks; ghost images and security threads.

### EXAMPLES

### Materials

All materials used in the following examples were readily available from standard sources such as Aldrich Chemical Co. (Belgium) and Acros (Belgium) unless otherwise specified. The water used was deionized water.

CCE is Bayhydrol H 2558, a anionic polyester urethane (37.3%) from BAYER.

### Resorcinol from Sumitomo Chemicals.

Par is a dimethytrimethylolamine formaldehyde resin from Cytec industries.
PAR-sol is a 40wt% aqueous solution of Par.
PEA is Tospearl™ 120 from Momentive Performance materials.
PEA-sol is a 10wt% (50/50) aqueous/ethanol dispersion of PEA.
Dowfax™ 2A1 from Pilot Chemicals C is a Alkyldiphenyloxide disulfonate (4.5%wt%).
DOW-sol is a 2.5wt% solution of Dowfax™ 2A1 in isopropanol.
Surfynol™ 420 from Air Products is a non ionic surfactant.
Surfynsol is a 2.5wt% solution of Surfynol™ 420 in isopropanol.

MEK is an abbreviation used for methylethylketone.
Solvin™ 557RB is a vinylchloride-vinylacetate copolymer with 11 % vinyl acetate, provided by SOLVAY.
SolvinSol is a 12.5 wt% solution of Solvin™ 557RB in MEK.
Vinnol™ H40/55 is a copolymer of 62 wt% vinyl chloride and 38 wt% of
vinyl acetate provided by Wacker AG.

VinnolSol is a 12.5 wt% solution of Vinnol™ H40/55 in MEK.

HDP is the hydrogen donor-precursor CASRN 129104-70-7 prepared according to the synthesis given on page 31 of EP 605149 A (JUJO PAPER) for the compound (19).

BLD is crystal violet lactone (CASRN 1552-42-7) available from YAMADA CHEMICAL CO.

MLD is a bisindolylphthalide leuco dye (CASRN50292-95-0) available as Pergascript™ Red 16B from BASF.

YLD is 3',6'-dimethoxyfluoran (CASRN36886-76-7) available from TCI Europe NV.

IR-1Asol is a 0.15 wt% solution in MEK of the infrared dye IR-1A.

IR-1Csol is a 0.15 wt% solution in MEK of the infrared dye IR-1C.

IR-2 is a 0.15 wt% solution in MEK of the infrared dye CASRN 223717-84-8 having an absorption maximum at 1052 nm and was prepared in the same manner as disclosed by paragraphs [0150] to [0159] of EP 2463109 A (AGFA) .

IR-3 was synthesized as follows via the intermediates IR-INT1 and IR-INT2:

### Synthesis of IR-absorber IR-INT1

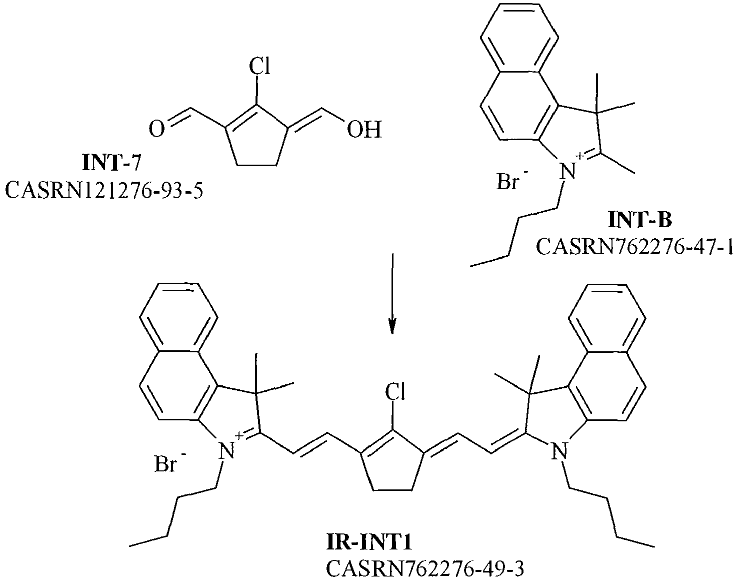

The synthesis of the intermediate INT-7 was performed as disclosed for infrared dye IR-1B.

The synthesis of the intermediate INT-B was performed as follows. 1 mol of 1,1,2-trimethyl-1H-benzo[e]indole (CASRN41532-84-7) and 2 mol of n-butyl bromide were stirred in 0.5 I sulfolane for four hours at 100°C. INT-B was filtered, washed with ethyl acetate and dried. The yield was 61%. To a stirred mixture of INT-7 (4.75 g; 30 mmol) and INT-B (20.8 g; 60 mmol) in ethanol (100 mL) at room temperature were added consecutively triethylamine (12.1 g; 120 mmol) and acetic acid anhydride (12.2 g; 120 mmol). After heating to 50 °C for 1 hour, the reaction mixture was cooled to 20 °C and isopropanol (100 mL) was added. After 1 hour the precipitated IR-absorber was isolated by filtration, washed with EtOAc (20 mL) and dried in vacuo. Yield (crude) of IR-INT1 was 16 g (73%). The absorption maximum of IR-INT1 measured in methanol was 844 nm.

### Synthesis of IR-absorber IR-INT2

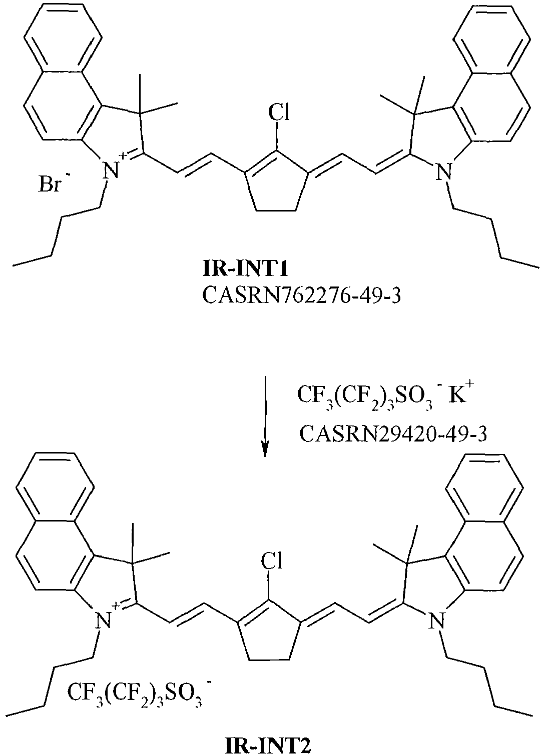

To a stirred suspension of IR-INT1 (16 g; 22 mmol) in acetonitrile (200 mL) was added potassium nonafluorobutanesulfonate (CASRN29420-49-3 from TCI Europe N.V.; 8.1 g; 24 mmol) and this mixture was heated at 70 °C for 15 minutes. After cooling to room temperature, water (100 mL) was drop wise added and after stirring for 2 hours the precipitated IR-absorber was isolated by filtration, washed consecutively with a mixture of acetonitrile / water 2/1 (20 mL), methyl tert. butylether (MTBE) (20 mL) and dried in vacuo. The yield of IR-INT2 was 14 g (67%). The absorption maximum of IR-INT2 measured in methanol was 844 nm.

### Synthesis of infrared dye IR-3

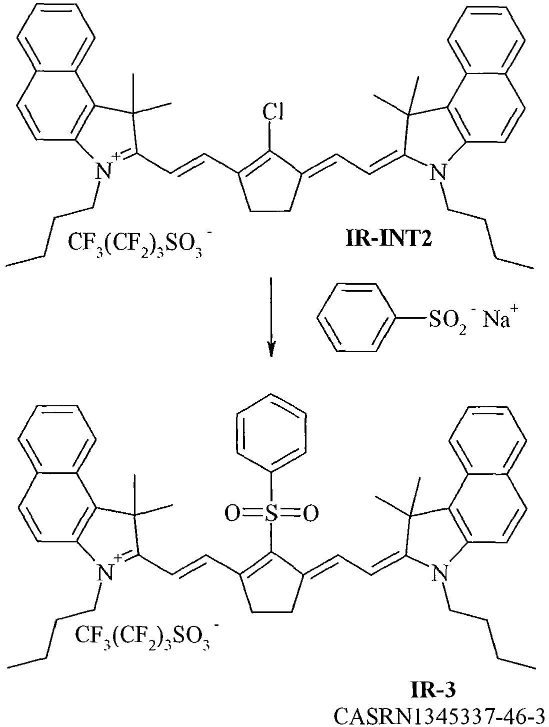

To a stirred suspension of IR-INT2 (1.65 g; 1,73 mmol) in methanol (15 mL) under nitrogen at room temperature is added sodium benzenesulfinate (CASRN873-55-2 from Aldrich; 0.297 g; 1,81 mmol). After stirring for 2 hours the precipitated IR-absorber was isolated by filtration, washed with MTBE (5 mL) and dried in vacuo. The yield of IR-3 was 1.2 g (65%). The absorption maximum measured in methanol was 910 nm. The absorption maximum of IR-3 measured in CH₂Cl₂ including 6.5 x 10⁻⁶wt% of methanesulfonic acid was 923 nm.

IR-3sol is a 0.15 wt% solution in MEK of the infrared dye IR-3.

CORE is a 500 µm opaque PETG core available as PET-G 500 type 9311 from WOLFEN.

PETG TR is a 35 µm thick transparent PETG support available as type - PET_G transparent 35 µm from AMCOR.

HOLO is a hot stamp hologram available on roll from OVD Kinegram AG.

### Measurement methods

### 1. Optical Density

The optical density was measured in reflection using a spectrodensitometer Type Macbeth TR924 using a visual filter.

### 2. Absorption maximum at λₘₐₓ(IR) and λₘₐₓ(VIS) of Infrared Dyes

The absorption maxima can be easily determined by absorption spectroscopy using a standard spectrophotometer capable of measuring the absorption between 300 and 1500 nm. Here a SHIMADZU UV-2101 PC spectrophotometer was used to measure the absorption maxima of an infrared dye dissolved in methylene chloride including 6.5 x 10⁻⁶wt% of methanesulfonic acid based on the total weight of methylenechloride. No methanesulfonic acid was used if the absorption spectrum was recorded in methanol or a solvent mixture therewith. The concentration of the infrared dye was adjusted according to the specific absorption characteristics of a dye so that an accurate measurement by the spectrophotometer was possible and not out of scale.

λₘₐₓ(IR) is the wavelength of the absorption maximum in the infrared spectrum from 700 to 1500 nm.

λₘₐₓ(VIS) is the wavelength of the absorption maximum in the visual spectrum from 400 to 700 nm.

For coated laser markable layers, the absorption between 250 nm tot 1500 nm was measured in steps of 10 nm using a PerkinElmer LAMBDA 950 UV/Vis/NIR Spectrophotometer.

### 3. IR/VIS

The ratio IR/VIS is determined by dividing the absorption at λₘₐₓ(IR) by the absorption at λₘₐₓ(VIS). For acceptable background discolouration the ratio IR/VIS should preferably be at least 3.5 and more preferably at least 7.0.

### EXAMPLE 1

This example illustrates the synthesis of infrared dye in accordance with the present invention.

### Synthesis of Infrared Dye IR-1A

The synthesis of IR-absorber IR-1 was carried out as described below by preparing firstly the intermediates INT-1 to INT-6.

### Synthesis of Intermediate INT-1

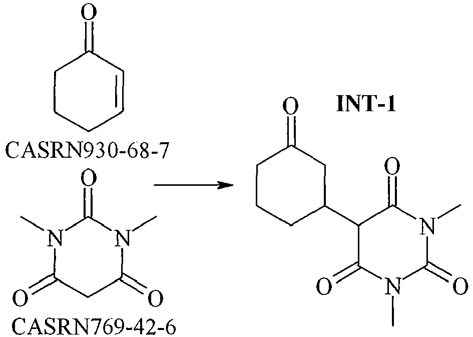

The starting materials cyclohexenone (CASRN930-68-7) and N,N-dimethyl barbituric acid (CASRN769-42-6) were commercially available compounds from TCI EUROPE N.V and Aldrich.

A mixture of cyclohexenone (48 g; 0.5 mol) and N,N-dimethyl barbituric acid (85.8 g; 0.55 mol) in water (0.5 L) was vigorously stirred at room temperature overnight. The white precipitate was filtered, digested with water (1.0 L) and dried in vacuo at 50 °C. Yield of INT-1 (white powder): 111 g (88%).

### Synthesis of Intermediate INT-2

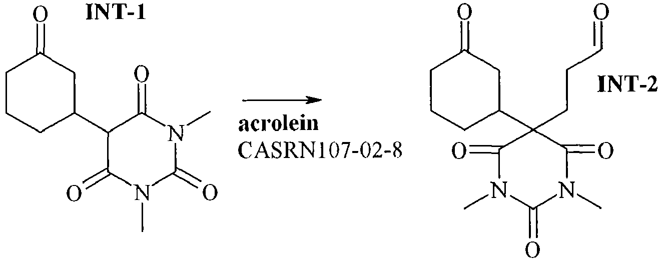

A mixture of INT-1 (37.8 g; 0.15 mol) and acrolein (containing 10% water and 0,1% hydroquinone) (14.0 g; 0.22 mol) in water (90 mL) and tetrahydrofuran (THF) (30 mL) was vigorously stirred at room temperature overnight. After addition of water (100 mL), stirring was continued for 1 hour. The white precipitate was filtered, digested with water (350 mL), filtered and dissolved in CH₂Cl₂(200 mL). After washing the CH₂Cl₂ layer with water (30 mL) and drying over Mg₂SO₄ (5 g), the CH₂Cl₂ layer was concentrated in vacuo (rotavap). Yield of INT-2 (sticky white powder): 38 g (82%).

### Synthesis of Intermediate INT-3

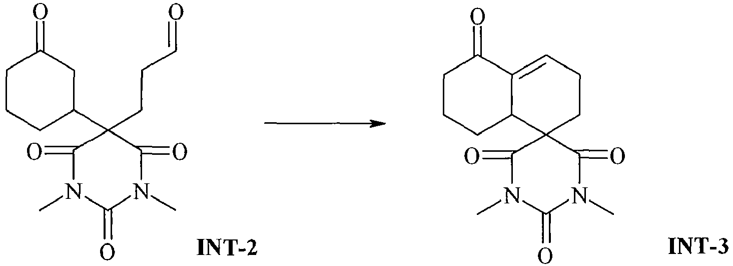

To a stirred solution of INT-2 (37 g; 0.12 mol) in CH₂Cl₂ (550 mL) was added a solution of methanesulfonic acid (5,76 g) in tetrahydrofuran (THF) (120 mL) at room temperature. After stirring for 24 hours, the mixture was consecutively extracted with a solution of NaHCO₃ (20 g) in water (200 mL), a solution of NaHCO₃ (7 g) in water (200 mL) and a solution of NaCl (10 g) in water (200 mL). After drying over Mg₂SO₄ (5 g), the organic layer was concentrated in vacuo (rotavap). Yield of INT-3 (sticky white powder): 30 g (85%).

### Synthesis of Intermediates INT-4 (in-situ) and INT-5 and INT-5'

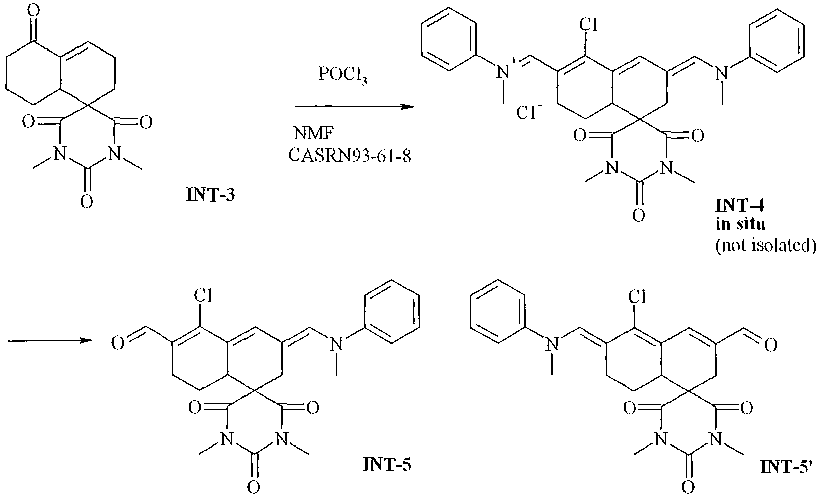

To a stirred solution of NMF (4.06 g; 0.03 mol) in methylacetate (40 mL) was added POCl₃ (6.9 g; 0.045 mmol) at 0°C. After stirring for 15 minutes, INT-3 (4.1 g; 0.014 mol) was added in small portions over a 15 minute period and then this mixture was heated to reflux (bath temperature 90°C) for 2 hours. After cooling on an ice bath, the blue coloured solution (containing INT-4) was poured into a cooled, well stirred solution of NaHCO₃ .3aq (30,5 g) in water (50 mL). After gradual warming the mixture to room temperature over a 1 hour period, the organic phase was separated, washed with saturated NaCl in water (10 mL), dried over Mg₂SO₄ (5 g) and concentrated (viscous dark oil, ca. 10 g). After redissolving this oil in a mixture of acetic acid (42 mL) and methanol (142 mL), water (210 mL) was added while vigorously stirring. The formed red-brown precipitate was collected by filtration, digested with water (50 mL), filtered and dried in vacuo in the presence of solid KOH. Yield of red-brown powder: 2.59 g (41%). The absorption maximum (in methanol) was found to be 443 nm.

According to LC-MS analysis, the product was mainly a mixture of 2 isomers (ratio: +/- 15:1) of INT-5 and INT-5' (or vice versa). Since this is inconsequential for the synthesis of IR-1A, the mixture was used directly in the next step.

### Synthesis of Intermediate INT-6 and IR-1A

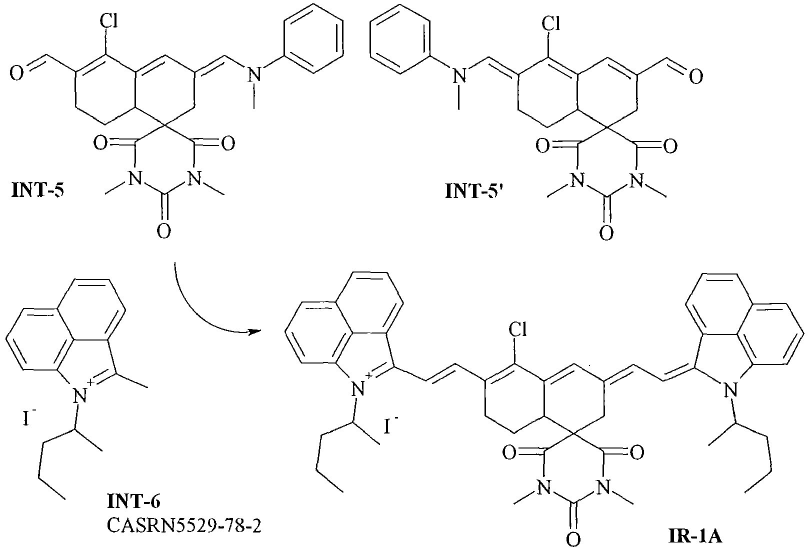

The synthesis of intermediate INT-6 was performed as disclosed in [0157] of EP 2463109 A (AGFA) .

A suspension of INT-5/INT-5' (2.27g; 5 mmol) and INT-6 (3.65 g; 10 mmol) was stirred overnight at room temperature in a mixture of methanol (25 mL) and CH₂Cl₂ (25 mL). The green-brown solids were isolated by filtration, digested in methanol (25 mL) for 15 minutes at room temperature, filtered and dried in vacuo. Yield of IR-1A (green-brown powder): 0.57 g (22%).

The absorption maximum of IR-1A measured in methanol was found to be 1132 nm . The absorption maximum of IR-1A measured in CH₂Cl₂ including 6.5 x 10⁻⁶wt% of methanesulfonic acid was 1154 nm.

### Synthesis of Infrared Dye IR-1B

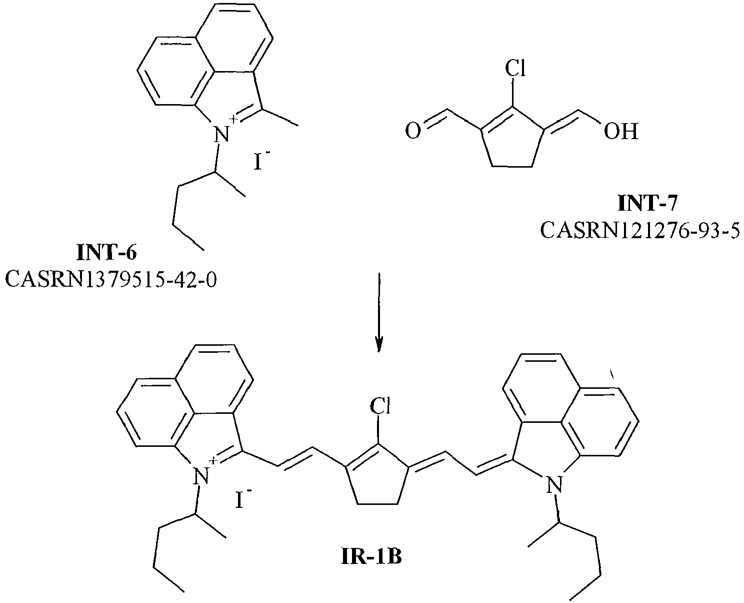

The intermediate INT-6 was prepared in the same manner as above for infrared dye IR-1A.

The synthesis of intermediate INT-7 was performed as follows. 10 mol of dimethylformamide and 3 mol phosphoryl chloride were heated up to 65°C. Then 1 mol of cyclopentanon was dropped to this mixture. After one hour of stirring at 60°C, the reaction mixture was poured into 2 I water containing 7 mol sodium acetate. INT-7 was filtered and dried. The yield was 60%.

To a stirred mixture of INT-7 containing 23% water (10.3 g; 0.05 mol) and INT-6 (36.5 g; 0.1 mol) in methanol (250 mL) was added a mixture of acetic acid (10,1 g; 0,1 mol) and triethylamine (18 g; 0,3 mol) over a 1 hour period. Stirring (under nitrogen) was continued for 1 hour at room temperature. The black precipitate was filtered and digested consecutively with 2x 20 mL of methanol and 2x 50 mL of methyl tertiary butylether (MTBE) and dried in vacuo. Yield of IR-1B (black powder): 27 g (74.6%).

The absorption maximum measured in methanol was 1040 nm. The absorption maximum of IR-1B measured in the CH₂Cl₂ including 6.5 × 10⁻⁶ wt% of methanesulfonic acid was 1062 nm. This infrared dye IR-1B is excluded from the scope of the present invention.

### Synthesis of Infrared Dye IR-1C

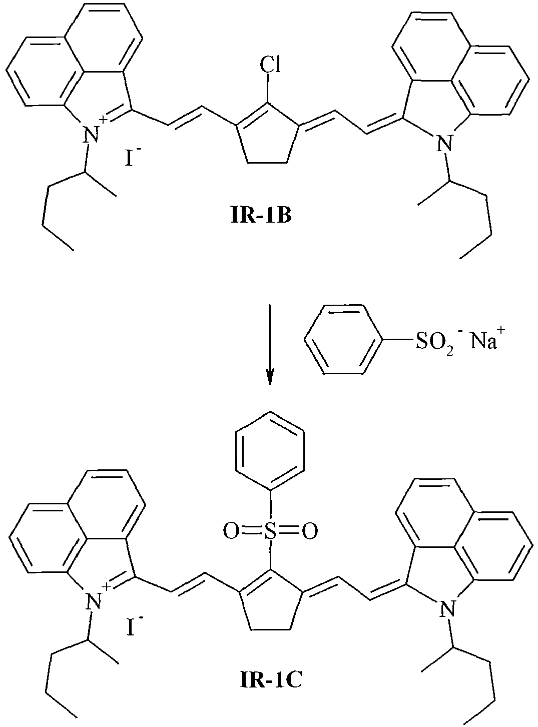

To a stirred suspension of IR-1B (500 mg; 0.69 mmol) in a mixture of ethanol (9 mL) and water (1 mL) at room temperature was added sodium benzenesulfonate (CASRN873-55-2; 135 mg; 0.82 mmol). After stirring for 15 minutes, the black precipitate was filtered, digested with a mixture of ethanol (4.5 mL) and water (0.5 mL) and dried in vacuo. The yield of IR-1C (black powder) was 467 mg (81%).

The absorption maximum measured in methanol was 1104 nm. The absorption maximum of IR-1C measured in CH₂Cl₂ including 6.5 x 10⁻⁶ wt% of methanesulfonic acid was 1120 nm.

### Synthesis of Infrared Dye IR-1D

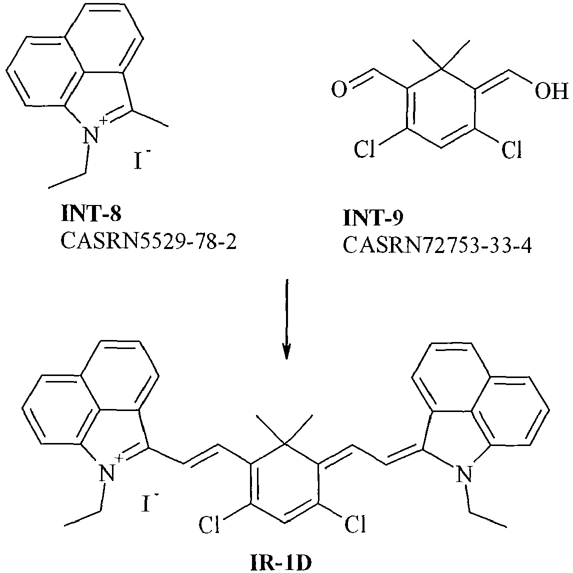

The synthesis of INT-8 was performed as in Sarmistha Halder Sinha, et al., European Journal of Medicinal Chemistry 54 (2012) 647-659.

The synthesis of INT-9 from dimedone was performed as described in Manfred Pulst, Bernd Hollborn, Manfred Weissenfels Journal f. prakt. Chemie, Band 321, Heft 4, 1979, S. 671-674

To a stirred suspension of INT-8 (81 mg; 0.25 mmol) and INT-9 (23 mg; 0.1 mmol) in a mixture of methanol (1 mL) and CH₂Cl₂ (1 mL) were added acetic acid (60 mg; 1,0 mmol) and indoline (25 mg; 0,2 mmol) at room temperature. After stirring over night, the precipitated IR-1D was filtered, digested consecutively with methanol (1 mL), a mixture of methanol (0,8 mL) and CH₂Cl₂ (0.2 mL) and dried in vacuo. The yield of IR-1D (black powder) was 10 mg (14%)

The absorption maximum measured in 1:1 mixture methanol / CH₂Cl₂ was found to be 1189 nm.

### EXAMPLE 2

This example illustrates the use of infrared dye IR-1A in accordance with the invention in a colour laser marking security document precursor.

### Preparation of PET-C foils PET1 and PET2

A coating composition SUB-1 was prepared by mixing the components according to Table 6 using a dissolver.

**Table 6**

| **wt% of components** | **SUB-1** |
|---|---|
| deionized water | 76.66 |
| CCE | 18.45 |
| Resorcinol | 0.98 |
| PAR-sol | 0.57 |
| PEA-sol | 0.68 |
| DOW-sol | 1.33 |
| Surfynsol | 1.33 |

A 1100 µm thick polyethylene terephthalate sheet was first longitudinally stretched and then coated on one side with the coating composition SUB-1 to a wet thickness of 10 µm. After drying, the longitudinally stretched and coated polyethylene terephthalate sheet was transversally stretched to produce a singlewide subbed 63 µm thick sheet PET1, which was transparent and glossy.

A 1100 µm thick polyethylene terephthalate sheet was first longitudinally stretched and then coated on both sides with the coating composition SUB-1 to a wet thickness of 10 µm. After drying, the longitudinally stretched and coated polyethylene terephthalate sheet was transversally stretched to produce a double side subbed 63 µm thick sheet PET2, which was transparent and glossy.

### Preparation of Laser Markable Inner Laminate IL1

The coating compositions BCOL1 and YCOL1 were prepared in the same way by mixing the components according to Table 7 using a dissolver.

**Table 7**

| **wt% of components** | **BCOL1** | **YCOL1** |
|---|---|---|
| MEK | 16.88 | 4.11 |
| SolvinSol | 60.00 | --- |
| VinSol | --- | 75.00 |
| IR-2 | 20.00 | --- |
| IR-1Asol | --- | 18.22 |
| HDP | 1.63 | 1.63 |
| BLD | 1.50 | --- |
| YLD | --- | 1.04 |

The coating composition BCOL1 was coated with an Elcometer Bird Film Applicator (from ELCOMETER INSTRUMENTS) on one side of the PET-C support PET2 at a coating thickness of 100 µm and subsequently dried for 2 minutes at 20°C on the film applicator and for a further 15 minutes in an oven at 75°C.

Then the coating composition YCOL1 was coated with an Elcometer Bird Film Applicator (from ELCOMETER INSTRUMENTS) on the opposite side of the PET-C support PET2 coated with BCOL1 at a coating thickness of 100 µm and subsequently dried for 2 minutes at 20°C on the film applicator and for a further 15 minutes in an oven at 75°C to deliver the laser markable inner laminate IL1.

### Preparation of Laser Markable Outer Laminate OL1

The coating composition MCOL1 was prepared by mixing the components according to Table 8 using a dissolver.

**Table 8**

| **wt% of components** | **MCOL1** |
|---|---|
| MEK | 0.07 |
| SolvinSol | 53.65 |
| IR-3sol | 40.7 |
| HDP | 2.13 |
| MLD | 3.45 |

The coating composition MCOL1 was coated with an Elcometer Bird Film Applicator (from ELCOMETER INSTRUMENTS) on the subbed side of the PET-C support PET1 at a coating thickness of 100 µm and subsequently dried for 2 minutes at 20°C on the film applicator and for a further 15 minutes in an oven at 75°C to deliver the laser markable outer laminate OL1.

### Preparation of Laser Markable Article LMA1

An assembly was made of, in order, a white opaque core support CORE, the laser markable inner laminate IL1, a 35 µm PETG TR foil, a hot stamp hologram HOLO, and the laser markable outer laminate OL1, wherein the side coated with YCOL1 of the laser markable inner laminate IL1 faces the white opaque core support CORE and wherein the side coated with MCOL1 of the laser markable outer laminate OL1 faces the hot stamp hologram HOLO.

The assembly was then laminated into a laser markable article LMA1 using an Oasys™ OLA6/7 plate laminator with the settings: LPT = 130°C, LP = 40, Hold = 210 sec, HPT = 130°C , HP = 40 and ECT = 50°C.

### Evaluation and Results

The laser markable article LMA1 was then laser marked with three infrared lasers of different emission wavelength.

A first optically pumped semiconductor laser emitting at 920 nm (Genesis MX 920-4000 MTM from COHERENT) was used for producing a magenta coloured wedge of 1cm x 1cm square boxes of increasing optical density up to a maximum optical density of 1.02 in the laser markable layer coated from MCOL1. The laser was used at a power level of 4.5 W (29.5 A), a dither of 0.025, a scan speed of 100 mm/s and at a pulse repetition rate of 1.2 kHz. The effective power was 70 to 90 mW.

A second optically pumped semiconductor laser emitting at 1064 nm (Genesis MX 1064-10000 MTM from COHERENT) was used for producing a blue coloured wedge of 1cm x 1cm square boxes of increasing optical density up to a maximum optical density of 1.38 in the laser markable layer coated from BCOL1. The laser was used at a power level of 4.0 W (21.8 A), a dither of 0.025, a scan speed of 100 mm/s and at a pulse repetition rate of 1.2 kHz. The effective power was 60 to 85 mW.

A third optically pumped semiconductor laser emitting at 1154 nm (Genesis MX 1154-6000 MTM from COHERENT) was used for producing a yellow coloured wedge of 1cm x 1cm square boxes of increasing optical density up to a maximum optical density of 0.55 in the laser markable layer coated from YCOL1. The laser was used at a power level of 2.25 W (19.4 A), a dither of 0.025, a scan speed of 100 mm/s and at a pulse repetition rate of 1.2 kHz. The effective power was 25 to 40 mW.

No colour contamination was observed in the different coloured wedges. This means that none of the three lasers caused any colour formation in a laser markable layer other than the one for which it was intended. For example, the 920 nm laser caused no blue respectively yellow colour formation in the laser markable layers coated from BCOL1 and YCOL1.

The hologram gave a special, different impression due to its incorporation in the colour image. The magenta colour image on top of the hologram was of higher optical density than an area neighbouring the hologram, while the blue and yellow colour image underneath the hologram were of smaller optical density than an area neighbouring the hologram. It is believed that this effect was caused by reflections of light from the infrared lasers.

### EXAMPLE 3

This example illustrates the use of infrared dye IR-1C in accordance with the invention in a colour laser marking security document precursor.

### Preparation of PET-C foils PET1 and PET2

The PET-C foils PET1 and PET2 were prepared in exactly the same manner as in Example 2.

### Preparation of Laser Markable Inner Laminate IL2

The coating compositions BCOL2 and YCOL2 were prepared in the same way by mixing the components according to Table 9 using a dissolver.

**Table 9**

| **wt% of components** | **BCOL2** | **YCOL2** |
|---|---|---|
| MEK | 27.26 | 1.95 |
| SolvinSol | 45.00 | --- |
| VinSol | --- | 75.00 |
| IR-2 | 24.00 | --- |
| IR-1Csol | --- | 20.42 |
| HDP | 1.79 | 1.63 |
| BLD | 1.95 | --- |
| YLD | --- | 1.00 |

The coating composition BCOL2 was coated with an Elcometer Bird Film Applicator (from ELCOMETER INSTRUMENTS) on one side of the PET-C support PET2 at a coating thickness of 100 µm and subsequently dried for 2 minutes at 20°C on the film applicator and for a further 15 minutes in an oven at 75°C.

Then the coating composition YCOL2 was coated with an Elcometer Bird Film Applicator (from ELCOMETER INSTRUMENTS) on the opposite side of the PET-C support PET2 coated with BCOL1 at a coating thickness of 100 µm and subsequently dried for 2 minutes at 20°C on the film applicator and for a further 15 minutes in an oven at 75°C to deliver the laser markable inner laminate IL2.

### Preparation of Laser Markable Outer Laminate OL2

The coating composition MCOL2 was prepared by mixing the components according to Table 10 using a dissolver.

**Table 10**

| **wt% of components** | **MCOL2** |
|---|---|
| MEK | 19.22 |
| SolvinSol | 45.00 |
| IR-3sol | 31.08 |
| HDP | 1.80 |
| MLD | 2.90 |

The coating composition MCOL2 was coated with an Elcometer Bird Film Applicator (from ELCOMETER INSTRUMENTS) on the subbed side of the PET-C support PET1 at a coating thickness of 100 µm and subsequently dried for 2 minutes at 20°C on the film applicator and for a further 15 minutes in an oven at 75°C to deliver the laser markable outer laminate OL2.

### Preparation of Laser Markable Article LMA2

An assembly was made of, in order, a white opaque core support CORE, the laser markable inner laminate IL2, a 35 µm PETG TR foil, a hot stamp hologram HOLO, and the laser markable outer laminate OL2, wherein the side coated with YCOL2 of the laser markable inner laminate IL2 faces the white opaque core support CORE.

The assembly was then laminated into a laser markable article LMA1 using an Oasys™ OLA6/7 plate laminator with the settings: LPT = 130°C, LP = 40, Hold = 210 sec, HPT = 130°C , HP = 40 and ECT = 50°C.

### Evaluation and Results

The laser markable article LMA2 was then laser marked with three infrared lasers of different emission wavelength.

A first optically pumped semiconductor laser emitting at 920 nm (Genesis MX 920-4000 MTM from COHERENT) was used for producing a magenta coloured wedge of ten 1cm x 1cm square boxes of increasing optical density up to a maximum optical density of 1.29 in the colour laser markable layer coated from MCOL2. The laser was used at a power level of 5.0 W, a dither of 0.025, a scan speed of 100 mm/s and at a pulse repetition rate of 1.2 kHz.

A second optically pumped semiconductor laser emitting at 1064 nm (Genesis MX 1064-10000 MTM from COHERENT) was used for producing a blue coloured wedge of ten 1cm x 1cm square boxes of increasing optical density up to a maximum optical density of 1.15 in the colour laser markable layer coated from BCOL2. The laser was used at a power level of 5.5, a dither of 0.025, a scan speed of 100 mm/s and at a pulse repetition rate of 1.2 kHz.

A third optically pumped semiconductor laser emitting at 1154 nm (Genesis MX 1154-6000 MTM from COHERENT) was used for producing a yellow coloured wedge of ten 1cm x 1cm square boxes of increasing optical density up to a maximum optical density of 0.56 in the colour laser markable layer coated from YCOL2. The laser was used at a power level of 5.5 W, a dither of 0.025, a scan speed of 100 mm/s and at a pulse repetition rate of 1.2 kHz.

No colour contamination was observed in the different coloured wedges. This means that none of the three lasers caused any colour formation in a laser markable layer other than the one for which it was intended. For example, the 920 nm laser caused no blue respectively yellow colour formation in the laser markable layers coated from BCOL2 and YCOL2.

The absorption spectrum of the laser markable laminate LMA2 was measured in steps of 10nm step as shown by Figure 4. A substantially flat absorption between 400 and 700 nm can be observed in Figure 4, which means that there is no dominant colour discolouring the background or Dₘᵢₙ area of the laser markable laminate LMA2. A visual observation of the background shows that it is light greyish. The spectrum also shows the peaks in the infrared region of the three infrared dyes. The corresponding wavelengths for the three infrared peaks are: 930 nm for λₘₐₓ(IR-3), 1050 nm for λₘₐₓ(IR-2) and 1140 nm for λₘₐₓ(IR-1). Simple calculation shows that the wavelengths of maximum absorption in the infrared region of the three infrared dyes differ by at least 90 nm.

### EXAMPLE 4

This example illustrates the effect of the nucleus groups A and C and the chain groups B on the absorption properties of the infrared dyes.

### Evaluation and Results

Table 11 shows the effect of the comparative nucleus groups CNA-1 to CNA-7 and CNC-1 to CNC-7 bearing some similarity with the nucleus groups A and C of the infrared dye of the invention. Also combinations falling outside the scope of the invention were used to illustrate the advantages in the absorption properties of the infrared dyes of the invention.

**Table 11**

| | | | |
|---|---|---|---|
| CNA-1 | 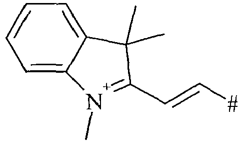 | CNC-1 | 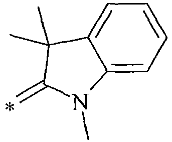 |
| CNA-2 | 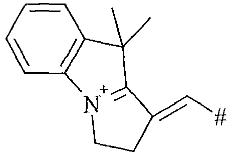 | CNC-2 | 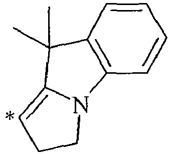 |
| CNA-3 | 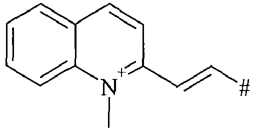 | CNC-3 | 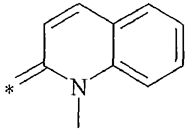 |
| CNA-4 | 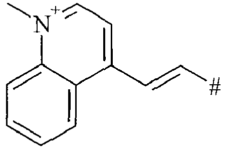 | CNC-4 | 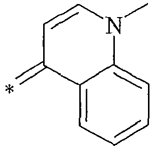 |
| CNA-5 | 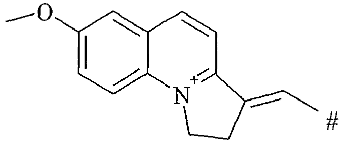 | CNC-5 | 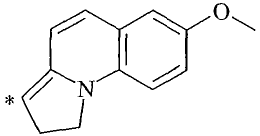 |
| CNA-6 | 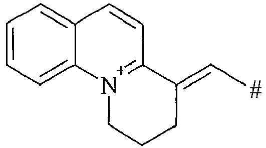 | CNC-6 | 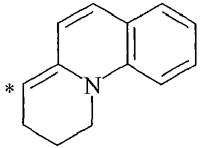 |
| CNA-7 | 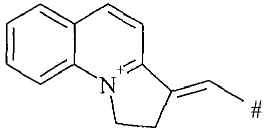 | CNC-7 | 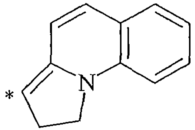 |

Table 12 shows the determined λₘₐₓ(IR) and the IR/VIS ratio for each infrared dye. The dyes all have chloride as one or more anions to compensate the charge of the dye cation.

**Table 12**

| **Dye N°** | **NucA** | **ChB** | **NucC** | **λmax(IR) ≥** | | | | **IR/VIS ≥** | |
|---|---|---|---|---|---|---|---|---|---|
| | | | | **1100 nm** | **1125 nm** | **1140 nm** | **1150 nm** | **3.5** | **7.0** |
| **1** | CNA-1 | CB-1 | CNC-1 | No | No | No | No | Yes | Yes |
| **2** | CNA-1 | CB-3 | CNC-1 | Yes | Yes | No | No | No | No |
| **3** | CNA-1 | CB-5 | CNC-1 | No | No | No | No | Yes | Yes |
| **4** | CNA-1 | CB-6 | CNC-1 | No | No | No | No | Yes | Yes |
| **5** | CNA-1 | CB-7 | CNC-1 | No | No | No | No | Yes | Yes |
| **6** | CNA-1 | CB-10 | CNC-1 | No | No | No | No | Yes | Yes |
| **7** | CNA-1 | CB-11 | CNC-1 | No | No | No | No | Yes | Yes |
| **8** | CNA-1 | CB-12 | CNC-1 | No | No | No | No | Yes | Yes |
| **9** | CNA-1 | CB-14 | CNC-1 | No | No | No | No | Yes | Yes |
| **10** | CNA-1 | CB-18 | CNC-1 | No | No | No | No | No | No |
| **11** | CNA-2 | CB-1 | CNC-2 | No | No | No | No | Yes | Yes |
| **12** | CNA-2 | CB-3 | CNC-2 | Yes | Yes | Yes | Yes | No | No |
| **13** | CNA-2 | CB-26 | CNC-2 | Yes | Yes | Yes | No | No | No |
| **14** | CNA-3 | CB-19 | CNC-3 | No | No | No | No | Yes | Yes |
| **15** | CNA-4 | CB-19 | CNC-4 | No | No | No | No | Yes | Yes |
| **16** | CNA-4 | CB-23 | CNC-4 | No | No | No | No | Yes | Yes |
| **17** | CNA-5 | CB-19 | CNC-5 | No | No | No | No | Yes | Yes |
| **18** | CNA-6 | CB-19 | CNC-6 | No | No | No | No | Yes | Yes |
| **19** | CNA-7 | CB-19 | CNC-7 | No | No | No | No | Yes | Yes |
| **20** | NA-1 | CB-19 | NC-1 | No | No | No | No | Yes | Yes |
| **21** | NA-2 | CB-19 | NC-2 | No | No | No | No | Yes | Yes |
| **22** | NA-2 | CB-25 | NC-2 | No | No | No | No | Yes | Yes |
| **23** | NA-1 | CB-1 | NC-1 | Yes | Yes | Yes | Yes | Yes | No |
| **24** | NA-1 | CB-2 | NC-1 | Yes | Yes | Yes | Yes | Yes | No |
| **25** | NA-1 | CB-4 | NC-1 | Yes | No | No | No | Yes | Yes |
| **26** | NA-1 | CB-5 | NC-1 | Yes | Yes | Yes | No | Yes | Yes |
| **27** | NA-1 | CB-6 | NC-1 | Yes | Yes | Yes | Yes | Yes | Yes |
| **28** | NA-1 | CB-7 | NC-1 | Yes | Yes | No | No | Yes | Yes |
| **29** | NA-1 | CB-8 | NC-1 | Yes | Yes | Yes | Yes | Yes | No |
| **30** | NA-1 | CB-9 | NC-1 | Yes | Yes | No | No | Yes | No |
| **31** | NA-1 | CB-10 | NC-1 | Yes | Yes | No | No | Yes | No |
| **32** | NA-1 | CB-11 | NC-1 | Yes | Yes | Yes | Yes | Yes | Yes |
| **33** | NA-1 | CB-12 | NC-1 | Yes | Yes | Yes | Yes | Yes | Yes |
| **34** | NA-1 | CB-13 | NC-1 | Yes | Yes | Yes | Yes | Yes | Yes |
| **35** | NA-1 | CB-14 | NC-1 | Yes | Yes | Yes | Yes | Yes | No |
| 36 | NA-1 | CB-15 | NC-1 | Yes | Yes | Yes | Yes | Yes | No |
| **37** | NA-1 | CB-16 | NC-1 | Yes | Yes | Yes | Yes | Yes | Yes |
| **38** | NA-1 | CB-17 | NC-1 | Yes | Yes | Yes | Yes | Yes | Yes |
| **39** | NA-1 | CB-17 | NC-1 | Yes | Yes | Yes | Yes | Yes | Yes |
| **40** | NA-1 | CB-18 | NC-1 | Yes | Yes | Yes | Yes | Yes | Yes |
| **41** | NA-3 | CB-19 | NC-3 | Yes | No | No | No | Yes | Yes |
| **42** | NA-4 | CB-19 | NC-4 | Yes | No | No | No | Yes | Yes |
| **43** | NA-5 | CB-19 | NC-5 | Yes | Yes | No | No | Yes | Yes |
| **44** | NA-5 | CB-19 | NC-5 | Yes | No | No | No | Yes | Yes |
| **45** | NA-5 | CB-23 | NC-5 | Yes | Yes | No | No | Yes | Yes |
| **46** | NA-6 | CB-19 | NC-6 | Yes | Yes | Yes | Yes | Yes | Yes |
| **47** | NA-7 | CB-19 | NC-7 | Yes | Yes | Yes | Yes | Yes | Yes |
| **48** | NA-8 | CB-19 | NC-8 | Yes | Yes | Yes | Yes | Yes | Yes |
| **49** | NA-9 | CB-19 | NC-9 | Yes | Yes | Yes | Yes | Yes | Yes |
| **50** | NA-12 | CB-19 | NC-12 | Yes | No | No | No | Yes | Yes |
| **51** | NA-13 | CB-19 | NC-13 | Yes | Yes | No | No | Yes | Yes |
| **52** | NA-15 | CB-19 | NC-15 | Yes | No | No | No | Yes | Yes |
| **53** | NA-16 | CB-19 | NC-16 | Yes | No | No | No | Yes | Yes |
| 54 | NA-17 | CB-19 | NC-17 | Yes | Yes | Yes | Yes | Yes | Yes |
| **55** | NA-18 | CB-19 | NC-18 | Yes | Yes | No | No | Yes | Yes |
| **56** | NA-19 | CB-19 | NC-19 | Yes | Yes | Yes | No | Yes | Yes |
| **57** | NA-20 | CB-19 | NC-20 | Yes | Yes | Yes | No | Yes | Yes |
| **58** | NA-20 | CB-25 | NC-20 | Yes | Yes | Yes | No | Yes | Yes |
| **59** | NA-21 | CB-19 | NC-21 | Yes | Yes | Yes | Yes | Yes | Yes |
| **60** | NA-22 | CB-19 | NC-22 | Yes | Yes | No | No | Yes | Yes |
| **61** | NA-22 | CB-23 | NC-22 | Yes | Yes | No | No | Yes | Yes |
| **62** | NA-22 | CB-24 | NC-22 | Yes | Yes | No | No | Yes | Yes |
| **63** | NA-24 | CB-11 | NC-24 | Yes | Yes | No | No | Yes | Yes |
| **64** | NA-24 | CB-3 | NC-24 | Yes | Yes | Yes | Yes | Yes | No |

From Table 12, it should be clear that the combination of the nucleus groups A and C and the chain groups B in accordance with the invention produces infrared dyes having absorption maximum above 1100 nm, while maintaining low background discolouration (high IR/VIS ratio).

## Claims

1. A laser markable article comprising a laser markable layer provided on a transparent polymeric support selected from the group consisting of an axially stretched polyethylene terephthalate support, a biaxially stretched polyethylene terephthalate support, an axially stretched polyethylene naphthalate support and a biaxially stretched polyethylene naphthalate support, the laser markable layer comprising an infrared dye having a chemical structure A-B-C consisting of a dye cation and an anion to compensate the charge of the dye cation, wherein the nucleus group A of the dye cation is selected from NucA-1 to NucA-3: 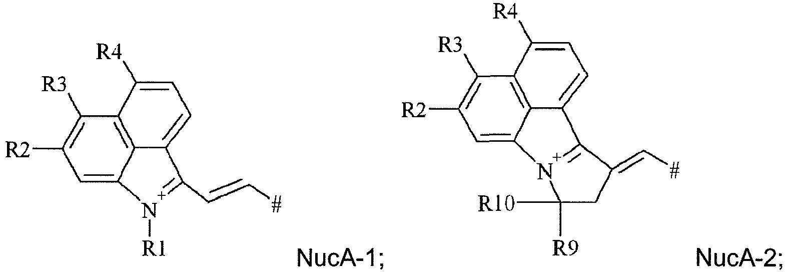 and 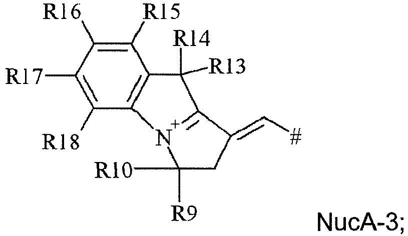 wherein the chain group B of the dye cation is selected from ChB-1 to ChB-9: 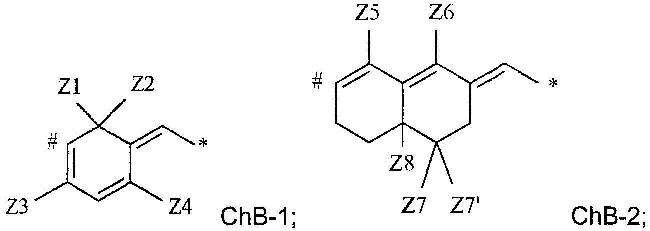 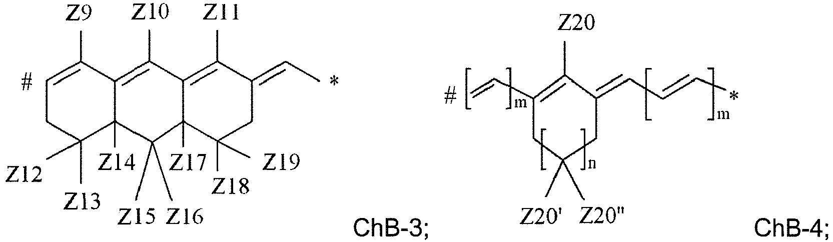 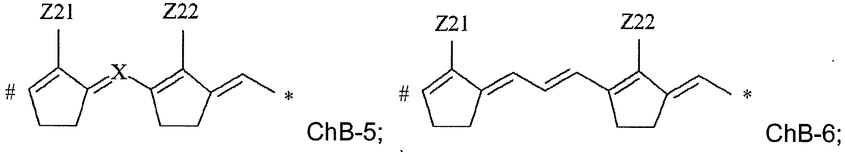 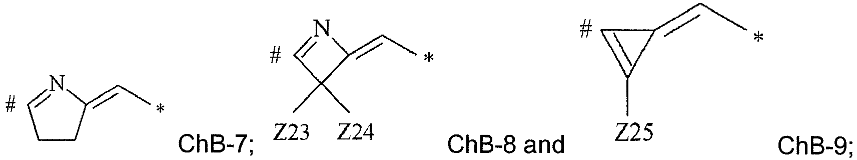 and wherein the nucleus group C of the dye cation is selected from NucC-1 to NucC-3: 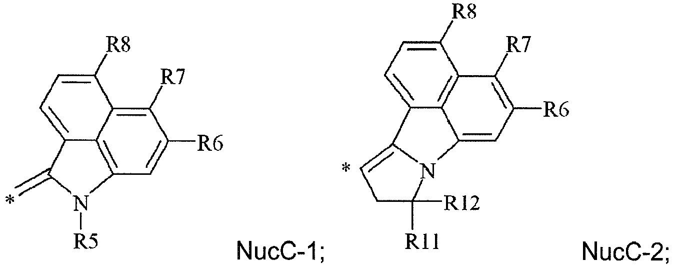 and 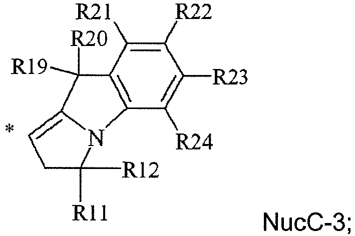
with # indicating the point of attachment between groups A and B;
with * indicating the point of attachment between groups B and C; and
wherein,
R1 and R5 each independently represent an alkyl group having 1 to 10 carbon atoms;
R3 and R7 each independently represent hydrogen, an alkoxy group having 1 to 10 carbon atoms; a thioalkyl group having 1 to 10 carbon atoms; a cyanide group; an ester group having 2 to 6 carbon atoms; an amide group having 2 to 6 carbon atoms; or a halogen;
R2, R4, R6 and R8 represent hydrogen; or
R2 and R3 may represent the necessary atoms to form a five- or six-membered ring including an oxygen or nitrogen atom directly attached to the carbon atom carrying the R3 group;
R4 and R3 may represent the necessary atoms to form a five- or six-membered ring including an oxygen or nitrogen atom directly attached to the carbon atom carrying the R3 group;
R6 and R7 may represent the necessary atoms to form a five- or six-membered ring including an oxygen or nitrogen atom directly attached to the carbon atom carrying the R7 group;
R8 and R7 may represent the necessary atoms to form a five- or six-membered ring including an oxygen or nitrogen atom directly attached to the carbon atom carrying the R7 group;
R9 to R12 each independently represent hydrogen or an alkyl group having 1 to 8 carbon atoms, or R9 and R10 and/or R11 and R12 may represent the necessary atoms to form an alicyclic five- or six-membered ring;
R13, R14, R19, R20 each independently represent an alkyl group having 1 to 8 carbon atoms;
R15 to R18 each independently represent hydrogen or one of R15 and R16, R16 and R17 or R17 and R18 may represent the necessary atoms to form a benzene ring;
R21 to R24 each independently represent hydrogen or one of R21 and R22, R22 and R23 or R23 and R24 may represent the necessary atoms to form a benzene ring;
Z1 and Z2 each independently represent an alkyl group having 1 to 6 carbon atoms, a cyanide group, an ester group having 2 to 6 carbon atoms, an amide group having 2 to 6 carbon atoms, an alicyclic group having 5 to 14 carbon atoms, a heterocyclic group having 2 to 14 carbon atoms, an aryl group having 6 to 14 carbon atoms or a heteroaryl group having 2 to 14 carbon atoms; or Z1 and Z2 may represent the necessary atoms to form an alicyclic group having 5 to 14 carbon atoms or a heterocyclic group having 4 to 14 carbon atoms;
Z3 to Z6 each independently represent hydrogen or halogen;
Z7 and Z7' each independently represent hydrogen, an alkyl group having 1 to 6 carbon atoms, a cyanide group, an ester group having 2 to 6 carbon atoms, an amide group having 2 to 6 carbon atoms, an alicyclic group having 5 to 14 carbon atoms, a heterocyclic group having 2 to 14 carbon atoms, an aryl group having 6 to 14 carbon atoms or a heteroaryl group having 4 to 14 carbon atoms, or Z7 and Z7' may represent the necessary atoms to form an alicyclic group having 5 to 14 carbon atoms or a heterocyclic group having 4 to 14 carbon atoms;
Z8 represents hydrogen or if at least one of Z7 and Z7' represents hydrogen Z8 may represent an alkyl group having 1 to 6 carbon atoms, a cyanide group, an ester group having 2 to 6 carbon atoms, an amide group having 1 to 6 carbon atoms or an aryl group having 6 to 14 carbon atoms;
Z9, Z10 and Z11 each independently represent hydrogen or halogen;
Z12 to Z19 each independently represent hydrogen, an alkyl group having 1 to 6 carbon atoms, an aryl group having 6 to 14 carbon atoms, or a heteroaryl group having 2 to 14 carbon atoms, a cyanide group, an ester group having 2 to 6 carbon atoms, an amide group having 2 to 6 carbon atoms or,
one or more of Z12 and Z13, Z15 and Z16 and Z18 and Z19 may represent the necessary atoms to form an alicyclic group having 5 to 14 carbon atoms or a heterocyclic group having 4 to 14 carbon atoms;
Z20 represents hydrogen, a halogen, a thioalkyl group having 1 to 8 carbon atoms, a thioaryl group having 5 to 14 carbon atoms, a thioheteroaryl group having 3 to 14 carbon atoms, an aryl group having 6 to 14 carbon atoms, a diarylamino group, an alkylsulfonyl group having 1 to 8 carbon atoms , an arylsulfonyl group having 6 to 14 carbon atoms or a heteroarylsulfonyl group having 2 to 14 carbon atoms;
the integers m and n independently have a value of 0 or 1;
Z20' and Z20" each independently represent hydrogen, an alkyl group having 1 to 8 carbon atoms, a cyanide group, an ester group having 2 to 8 carbon atoms, an amide group having 2 to 8 carbon atoms or an aryl group having 6 to 14 carbon atoms or Z20' and Z20" may represent the necessary atoms to form an alicyclic group having 5 to 14 carbon atoms or a heterocyclic group having 4 to 14 carbon atoms;
Z21 and Z22 each independently represent hydrogen, halogen, a thioalkyl group having 1 to 8 carbon atoms or a thioaryl group having 5 to 14 carbon atoms;
X represents nitrogen, a -CH-group or if both Z21 and Z22 represent hydrogen then X may represent a -CR-group with R representing an aryl group having 6 to 14 carbon atoms;
Z23 and Z24 each independently represent an alkyl group having 1 to 8 carbon atoms, an aryl group having 6 to 14 carbon atoms or Z23 and Z24 may represent the necessary atoms to form a five- or six-membered ring;
Z25 represents hydrogen or an aryl group;
with the proviso that when the chain group ChB-4 with the integer m = 0 is combined simultaneously with NucA-1 and NucC-1 that R3 and R6 do not represent hydrogen;
**characterized in that** the infrared dye has an absorption maximum in the infrared region λₘₐₓ(IR) of more than 1100 nm as measured by absorption spectroscopy in methylene chloride including 6.5 x 10⁻⁶wt% of methanesulfonic acid based on the total weight of methylenechloride.

2. The laser markable article according to claim 1, wherein the infrared dye has an absorption maximum in the infrared region λₘₐₓ(IR) of more than 1125 nm as measured by absorption spectroscopy in methylene chloride including 6.5 x 10⁻⁶ wt% of methanesulfonic acid based on the total weight of methylenechloride.

3. The laser markable article according to claim 1 or 2, wherein R1 and R5 each independently represent an α-branched alkyl group.

4. The laser markable article according to any one of claims 1 to 3, wherein the infrared dye includes ChB-2 as chain group C, wherein Z7 and Z7' represent the necessary atoms for forming a barbituric acid group wherein the nitrogen atoms are substituted by an alkyl group, an aryl group, an alkaryl group or an aralkyl group.

5. The laser markable article according to any one of claims 1 to 3, wherein the infrared dye includes a non-fluorinated anion to compensate the charge of the dye cation having NucA-1 and NucC-1 as the nuclei A respectively C, wherein R1 and R5 each independently represent a branched alkyl group; and ChB-4 as the chain group with Z20 representing a diphenylamino group, an alkylsulfonyl group having 1 to 8 carbon atoms, an arylsulfonyl group having 6 to 14 carbon atoms or a heteroarylsulfonyl group having 2 to 14 carbon atoms.

6. The laser markable article according to any of the preceding claims, wherein the laser markable layer includes a leuco dye.

7. The laser markable article according to any of the preceding claims, wherein the laser markable layer includes a polymeric binder comprising vinyl acetate and at least 85 wt% of vinyl chloride based on the total weight of the binder.

8. The laser markable article according to any of the preceding claims, wherein on the opposite side of the transparent polymeric support a second laser markable layer is present including a second infrared dye having a absorption maximum in the infrared region λₘₐₓ(IR-2), wherein 1000 nm < λₘₐₓ(IR-2) < 1100 nm.

9. The laser markable article according to claim 8, further including a third laser markable layer including a third infrared dye having a absorption maximum in the infrared region λₘₐₓ(IR-3), wherein 830 nm < λₘₐₓ(IR-3) < 1000 nm.

10. A method of laser marking a laser markable article according to any one of claims 1 to 9 by an infrared laser having an emission wavelength between 1130 nm and 1200 nm.

11. The method of laser marking according to claim 10, wherein the article is further laser marked by an infrared laser having an emission wavelength between 1020 nm and 1080 nm and/or by an infrared laser having an emission wavelength between 830 nm and 940 nm.

## Patentansprüche

1. Ein lasermarkierbarer Artikel, umfassend eine lasermarkierbare Schicht, die auf einen transparenten polymeren Träger, ausgewählt aus der Gruppe bestehend aus einem axial verstreckten Polyethylenterephthalatträger, einem biaxial verstreckten Polyethylenterephthalatträger, einem axial verstreckten Polyethylennaphthalatträger und einem biaxial verstreckten Polyethylennaphthalatträger, aufgetragen ist, wobei die lasermarkierbare Schicht einen Infrarotfarbstoff entsprechend einer chemischen Struktur A-B-C, bestehend aus einem Farbstoffkation und einem die Ladung des Farbstoffkations ausgleichenden Anion, enthält, wobei die Kerngruppe A des Farbstoffkations gewählt wird aus NucA-1 bis NucA-3: 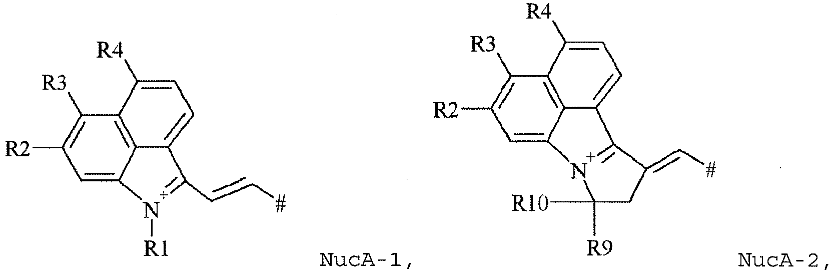 und 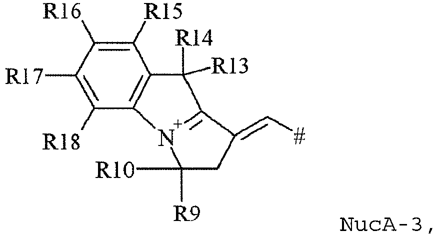 wobei die Kettengruppe B des Farbstoffkations gewählt wird aus ChB-1 bis ChB-9: 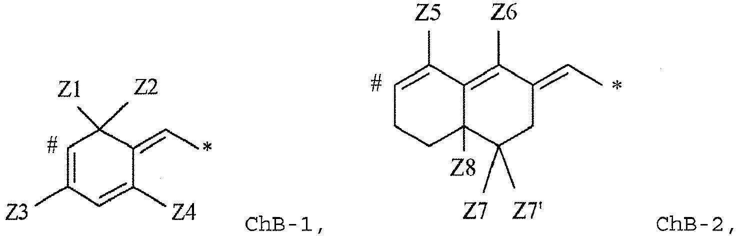 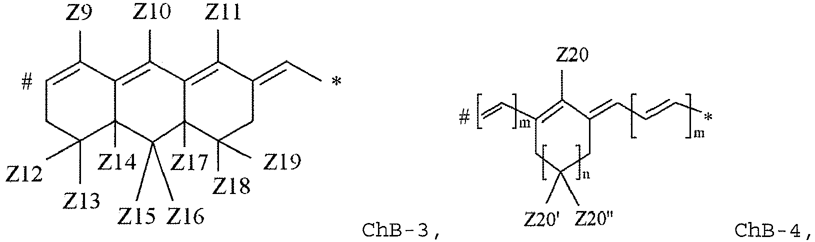 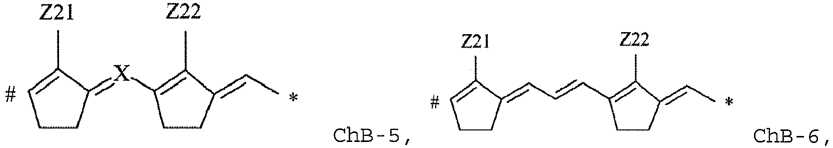 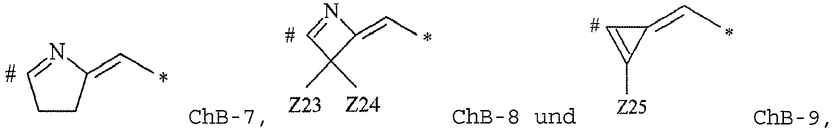 und wobei die Kerngruppe C des Farbstoffkations gewählt wird aus NucC-1 bis NucC-3: 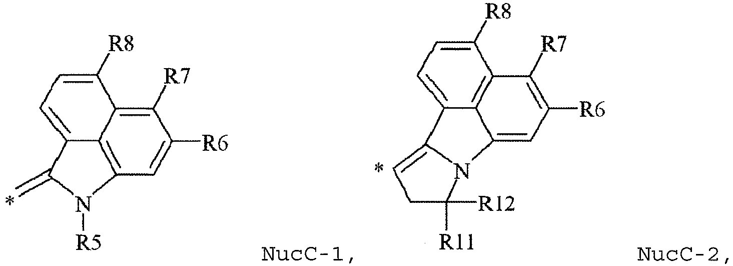 und 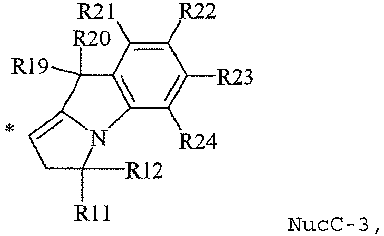
wobei # den Bindungspunkt zwischen den Gruppen A und B darstellt,
wobei * den Bindungspunkt zwischen den Gruppen B und C darstellt, und
wobei R1 und R5 unabhängig voneinander jeweils eine Alkylgruppe mit 1 bis 10 Kohlenstoffatomen darstellen,
R3 und R7 unabhängig voneinander jeweils Wasserstoff, eine Alkoxygruppe mit 1 bis 10 Kohlenstoffatomen, eine Thioalkylgruppe mit 1 bis 10 Kohlenstoffatomen, eine Cyanidgruppe, eine Estergruppe mit 2 bis 6 Kohlenstoffatomen, eine Amidgruppe mit 2 bis 6 Kohlenstoffatomen oder Halogen darstellen, R2, R4, R6 und R8 Wasserstoff darstellen oder
R2 und R3 die zur Bildung eines fünf- oder sechsgliedrigen Ringes erforderlichen Atome darstellen können, wobei der Ring ein direkt an das die R3-Gruppe tragende Kohlenstoffatom gebundenes Sauerstoff- oder Stickstoffatom enthält,
R4 und R3 die zur Bildung eines fünf- oder sechsgliedrigen Ringes erforderlichen Atome darstellen können, wobei der Ring ein direkt an das die R3-Gruppe tragende Kohlenstoffatom gebundenes Sauerstoff- oder Stickstoffatom enthält,
R6 und R7 die zur Bildung eines fünf- oder sechsgliedrigen Ringes erforderlichen Atome darstellen können, wobei der Ring ein direkt an das die R7-Gruppe tragende Kohlenstoffatom gebundenes Sauerstoff- oder Stickstoffatom enthält,
R8 und R7 die zur Bildung eines fünf- oder sechsgliedrigen Ringes erforderlichen Atome darstellen können, wobei der Ring ein direkt an das die R7-Gruppe tragende Kohlenstoffatom gebundenes Sauerstoff- oder Stickstoffatom enthält,
R9 bis R12 unabhängig voneinander jeweils Wasserstoff oder eine Alkylgruppe mit 1 bis 8 Kohlenstoffatomen darstellen oder R9 und R10 und/oder R11 und R12 die zur Bildung eines alicyclischen fünf- oder sechsgliedrigen Ringes erforderlichen Atome darstellen können,
R13, R14, R19 und R20 unabhängig voneinander jeweils eine Alkylgruppe mit 1 bis 8 Kohlenstoffatomen darstellen,
R15 bis R18 unabhängig voneinander jeweils Wasserstoff darstellen oder eine Kombination aus der Gruppe bestehend aus R15 und R16, R16 und R17 und R17 und R18 die zur Bildung eines Benzolringes erforderlichen Atome darstellen kann,
R21 bis R24 unabhängig voneinander jeweils Wasserstoff darstellen oder eine Kombination aus der Gruppe bestehend aus R21 und R22, R22 und R23 und R23 und R24 die zur Bildung eines Benzolringes erforderlichen Atome darstellen kann,
Z1 und Z2 unabhängig voneinander jeweils eine Alkylgruppe mit 1 bis 6 Kohlenstoffatomen, eine Cyanidgruppe, eine Estergruppe mit 2 bis 6 Kohlenstoffatomen, eine Amidgruppe mit 2 bis 6 Kohlenstoffatomen, eine alicyclische Gruppe mit 5 bis 14 Kohlenstoffatomen, eine heterocyclische Gruppe mit 2 bis 14 Kohlenstoffatomen, eine Arylgruppe mit 6 bis 14 Kohlenstoffatomen oder eine Heteroarylgruppe mit 2 bis 14 Kohlenstoffatomen darstellen oder Z1 und Z2 die zur Bildung einer alicyclischen Gruppe mit 5 bis 14 Kohlenstoffatomen oder einer heterocyclischen Gruppe mit 4 bis 14 Kohlenstoffatomen erforderlichen Atome darstellen können,
Z3 bis Z6 unabhängig voneinander jeweils Wasserstoff oder Halogen darstellen,
Z7 und Z7' unabhängig voneinander jeweils Wasserstoff, eine Alkylgruppe mit 1 bis 6 Kohlenstoffatomen, eine Cyanidgruppe, eine Estergruppe mit 2 bis 6 Kohlenstoffatomen, eine Amidgruppe mit 2 bis 6 Kohlenstoffatomen, eine alicyclische Gruppe mit 5 bis 14 Kohlenstoffatomen, eine heterocyclische Gruppe mit 2 bis 14 Kohlenstoffatomen, eine Arylgruppe mit 6 bis 14 Kohlenstoffatomen oder eine Heteroarylgruppe mit 4 bis 14 Kohlenstoffatomen darstellen, oder Z7 und Z7' die zur Bildung einer alicyclischen Gruppe mit 5 bis 14 Kohlenstoffatomen oder einer heterocyclischen Gruppe mit 4 bis 14 Kohlenstoffatomen erforderlichen Atome darstellen können,
Z8 Wasserstoff darstellt oder, wenn mindestens eines von Z7 und Z7' Wasserstoff darstellt, Z8 eine Alkylgruppe mit 1 bis 6 Kohlenstoffatomen, eine Cyanidgruppe, eine Estergruppe mit 2 bis 6 Kohlenstoffatomen, eine Amidgruppe mit 1 bis 6 Kohlenstoffatomen oder eine Arylgruppe mit 6 bis 14 Kohlenstoffatomen darstellen kann,
Z9, Z10 und Z11 unabhängig voneinander jeweils Wasserstoff oder Halogen darstellen,
Z12 bis Z19 unabhängig voneinander jeweils Wasserstoff, eine Alkylgruppe mit 1 bis 6 Kohlenstoffatomen, eine Arylgruppe mit 6 bis 14 Kohlenstoffatomen oder eine Heteroarylgruppe mit 2 bis 14 Kohlenstoffatomen, eine Cyanidgruppe, eine Estergruppe mit 2 bis 6 Kohlenstoffatomen oder eine Amidgruppe mit 2 bis 6 Kohlenstoffatomen darstellen oder eine oder mehrere der Kombinationen Z12 und Z13, Z15 und Z16 und Z18 und Z19 die zur Bildung einer alicyclischen Gruppe mit 5 bis 14 Kohlenstoffatomen oder einer heterocyclischen Gruppe mit 4 bis 14 Kohlenstoffatomen erforderlichen Atome darstellen können,
Z20 Wasserstoff, Halogen, eine Thioalkylgruppe mit 1 bis 8 Kohlenstoffatomen, eine Thioarylgruppe mit 5 bis 14 Kohlenstoffatomen, eine Thioheteroarylgruppe mit 3 bis 14 Kohlenstoffatomen, eine Arylgruppe mit 6 bis 14 Kohlenstoffatomen, eine Diarylaminogruppe, eine Alkylsulfonylgruppe mit 1 bis 8 Kohlenstoffatomen, eine Arylsulfonylgruppe mit 6 bis 14 Kohlenstoffatomen oder eine Heteroarylsulfonylgruppe mit 2 bis 14 Kohlenstoffatomen darstellt,
die ganzen Zahlen m und n unabhängig voneinander 0 oder 1 bedeuten,
Z20' und Z20" unabhängig voneinander jeweils Wasserstoff, eine Alkylgruppe mit 1 bis 8 Kohlenstoffatomen, eine Cyanidgruppe, eine Estergruppe mit 2 bis 8 Kohlenstoffatomen, eine Amidgruppe mit 2 bis 8 Kohlenstoffatomen oder eine Arylgruppe mit 6 bis 14 Kohlenstoffatomen darstellen oder Z20' und Z20" die zur Bildung einer alicyclischen Gruppe mit 5 bis 14 Kohlenstoffatomen oder einer heterocyclischen Gruppe mit 4 bis 14 Kohlenstoffatomen erforderlichen Atome darstellen können,
Z21 und Z22 unabhängig voneinander jeweils Wasserstoff, Halogen, eine Thioalkylgruppe mit 1 bis 8 Kohlenstoffatomen oder eine Thioarylgruppe mit 5 bis 14 Kohlenstoffatomen darstellen,
X Stickstoff oder eine-CH-Gruppe darstellt oder, wenn sowohl Z21 als auch Z22 Wasserstoff darstellen, X eine -CR-Gruppe, wobei R eine Arylgruppe mit 6 bis 14 Kohlenstoffatomen darstellt, darstellen kann,
Z23 und Z24 unabhängig voneinander jeweils eine Alkylgruppe mit 1 bis 8 Kohlenstoffatomen oder eine Arylgruppe mit 6 bis 14 Kohlenstoffatomen darstellen oder Z23 und Z24 die zur Bildung eines fünf- oder sechsgliedrigen Ringes erforderlichen Atome darstellen können,
Z25 Wasserstoff oder eine Arylgruppe darstellt,
mit der Maßgabe, dass, wenn die Kettengruppe ChB-4 mit der ganzen Zahl m = 0 gleichzeitig mit NucA-1 und NucC-1 kombiniert wird, R3 und R6 kein Wasserstoff darstellen,
**dadurch gekennzeichnet, dass** der Infrarotfarbstoff ein Absorptionsmaximum im Infrarotbereich λₘₐₓ(IR) von mehr als 1.100 nm aufweist, wie mittels Absorptionsspektroskopie gemessen in Methylenchlorid, enthaltend 6,5 x 10⁻⁶ Gew.-% Methansulfonsäure, bezogen auf das Gesamtgewicht an Methylenchlorid.

2. Der lasermarkierbare Artikel nach Anspruch 1, wobei der Infrarotfarbstoff ein Absorptionsmaximum im Infrarotbereich λₘₐₓ(IR) von mehr als 1.125 nm aufweist, wie mittels Absorptionsspektroskopie gemessen in Methylenchlorid, enthaltend 6,5 x 10⁻⁶ Gew.-% Methansulfonsäure, bezogen auf das Gesamtgewicht an Methylenchlorid.

3. Der lasermarkierbare Artikel nach Anspruch 1 oder 2, wobei R1 und R5 unabhängig voneinander jeweils eine α-verzweigte Alkylgruppe bedeuten.

4. Der lasermarkierbare Artikel nach einem der Ansprüche 1 bis 3, wobei der Infrarotfarbstoff ChB-2 als Kettengruppe C enthält, wobei Z7 und Z7' die zur Bildung einer Barbitursäuregruppe erforderlichen Atome, wobei die Stickstoffatome durch eine Alkylgruppe, eine Arylgruppe, eine Alkarylgruppe oder eine Aralkylgruppe substituiert sind, bedeuten.

5. Der lasermarkierbare Artikel nach einem der Ansprüche 1 bis 3, wobei der Infrarotfarbstoff ein nicht-fluoriertes Anion zur Ausgleichung der Ladung des NucA-1 und NucC-1 als Kern A bzw. Kern C enthaltenden Farbstoffkations, wobei R1 und R5 unabhängig voneinander jeweils eine verzweigte Alkylgruppe bedeuten, und ChB-4 als die Kettengruppe enthält, wobei Z20 eine Diphenylaminogruppe, eine Alkylsulfonylgruppe mit 1 bis 8 Kohlenstoffatomen, eine Arylsulfonylgruppe mit 6 bis 14 Kohlenstoffatomen oder eine Heteroarylsulfonylgruppe mit 2 bis 14 Kohlenstoffatomen bedeutet.

6. Der lasermarkierbare Artikel nach einem der vorstehenden Ansprüche, wobei die lasermarkierbare Schicht einen Leukofarbstoff enthält.

7. Der lasermarkierbare Artikel nach einem der vorstehenden Ansprüche, wobei die lasermarkierbare Schicht ein polymeres Bindemittel, enthaltend Vinylacetat und mindestens 85 Gew.-% Vinylchlorid, bezogen auf das Gesamtgewicht des Bindemittels, enthält.

8. Der lasermarkierbare Artikel nach einem der vorstehenden Ansprüche, wobei auf der gegenüberliegenden Seite des transparenten polymeren Trägers eine zweite lasermarkierbare Schicht, enthaltend einen zweiten Infrarotfarbstoff mit einem Absorptionsmaximum im Infrarotbereich λₘₐₓ(IR-2), aufgetragen ist, wobei 1.000 nm < λₘₐₓ(IR-2) < 1.100 nm.

9. Der lasermarkierbare Artikel nach Anspruch 8, ferner enthaltend eine dritte lasermarkierbare Schicht, enthaltend einen dritten Infrarotfarbstoff mit einem Absorptionsmaximum im Infrarotbereich λₘₐₓ(IR-3), wobei 830 nm < λₘₐₓ(IR-3) < 1.000 nm.

10. Ein Verfahren zur Lasermarkierung eines lasermarkierbaren Artikels nach einem der Ansprüche 1 bis 9 mittels eines Infrarotlasers mit einer Emissionswellenlänge zwischen 1.130 nm und 1.200 nm.

11. Das Lasermarkierungsverfahren nach Anspruch 10, wobei der Artikel ferner mittels eines Infrarotlasers mit einer Emissionswellenlänge zwischen 1.020 nm und 1.080 nm und/oder mittels eines Infrarotlasers mit einer Emissionswellenlänge zwischen 830 nm und 940 nm lasermarkiert wird.

## Revendications

1. Article marquable au laser, comprenant une couche marquable au laser appliquée sur un support polymère transparent choisi parmi le groupe composé d'un support de polyéthylène-téréphtalate axialement étiré, d'un support de polyéthylène-téréphtalate biaxialement étiré, d'un support de polyéthylène-naphtalate axialement étiré et d'un support de polyéthylène-naphtalate biaxialement étiré, ladite couche marquable au laser contenant un colorant absorbant les rayons infrarouges ayant une structure chimique A-B-C composée d'un cation de colorant et d'un anion compensateur de la charge du cation de colorant, le groupe de noyau A du cation de colorant étant choisi parmi NucA-1 à NucA-3: 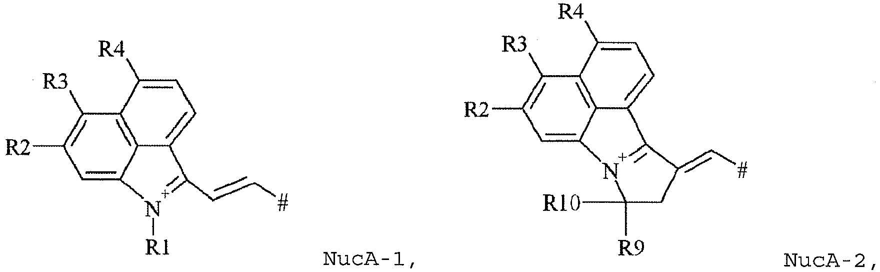 et 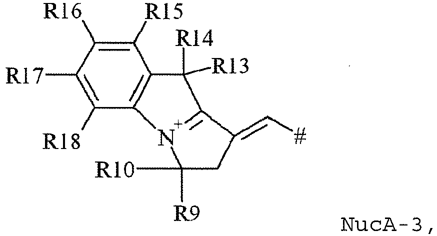 le groupe de chaîne B du cation de colorant étant choisi parmi ChB-1 à ChB-9: 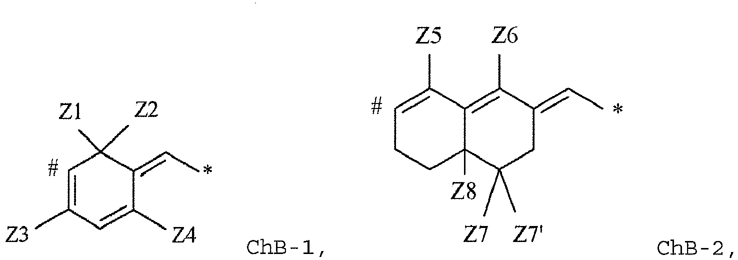 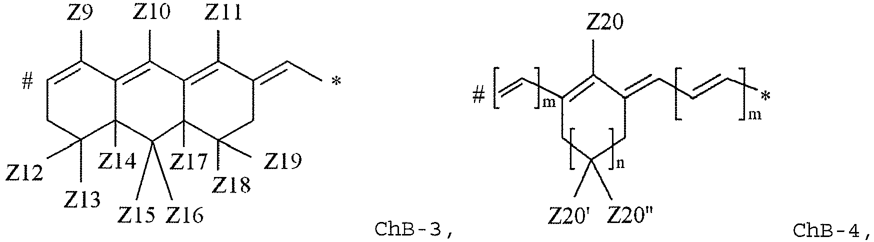 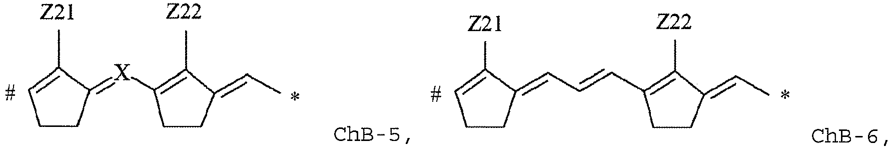 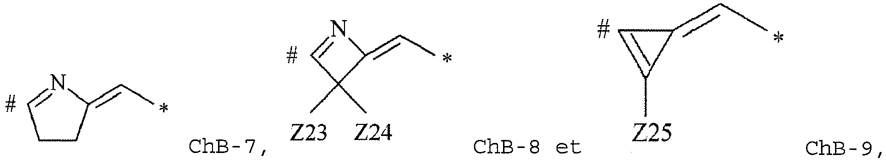 le groupe de noyau C du cation de colorant étant choisi parmi NucC-1 à NucC-3: 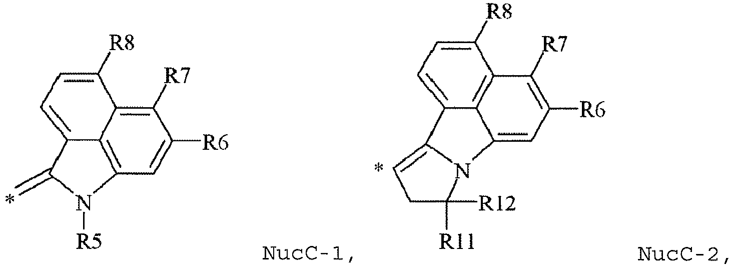 et 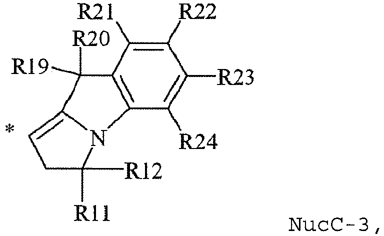
où # représente le point de liaison entre les groupes A et B,
où * représente le point de liaison entre les groupes B et C, et où R1 et R5 représentent chacun, indépendamment l'un de l'autre, un groupe alkyle comprenant 1 à 10 atomes de carbone,
R3 et R7 représentent chacun, indépendamment l'un de l'autre, un atome d'hydrogène, un groupe alcoxy comprenant 1 à 10 atomes de carbone, un groupe thioalkyle comprenant 1 à 10 atomes de carbone, un groupe cyanure, un groupe ester comprenant 2 à 6 atomes de carbone, un groupe amide comprenant 2 à 6 atomes de carbone ou un atome d'halogène,
R2, R4, R6 et R8 représentent un atome d'hydrogène ou
R2 et R3 peuvent représenter les atomes nécessaires pour former un noyau pentagonal ou hexagonal contenant un atome d'oxygène ou d'azote lié directement à l'atome de carbone porteur du groupe R3,
R4 et R3 peuvent représenter les atomes nécessaires pour former un noyau pentagonal ou hexagonal contenant un atome d'oxygène ou d'azote lié directement à l'atome de carbone porteur du groupe R3,
R6 et R7 peuvent représenter les atomes nécessaires pour former un noyau pentagonal ou hexagonal contenant un atome d'oxygène ou d'azote lié directement à l'atome de carbone porteur du groupe R7,
R8 et R7 peuvent représenter les atomes nécessaires pour former un noyau pentagonal ou hexagonal contenant un atome d'oxygène ou d'azote lié directement à l'atome de carbone porteur du groupe R7,
R9 à R12 représentent chacun, indépendamment l'un de l'autre, un atome d'hydrogène ou un groupe alkyle comprenant 1 à 8 atomes de carbone ou R9 et R10 et/ou R11 et R12 peuvent représenter les atomes nécessaires pour former un noyau pentagonal ou hexagonal alicyclique,
R13, R14, R19 et R20 représentent chacun, indépendamment l'un de l'autre, un groupe alkyle comprenant 1 à 8 atomes de carbone,
R15 à R18 représentent, indépendamment l'un de l'autre, un atome d'hydrogène ou une combinaison choisie parmi le groupe composé de R15 et R16, R16 et R17 et R17 et R18 peut représenter les atomes nécessaires pour former un noyau de benzène,
R21 à R24 représentent chacun, indépendamment l'un de l'autre, un atome d'hydrogène ou une combinaison choisie parmi le groupe composé de R21 et R22, R22 et R23 et R23 et R24 peut représenter les atomes nécessaires pour former un noyau de benzène,
Z1 et Z2 représentent chacun, indépendamment l'un de l'autre, un groupe alkyle comprenant 1 à 6 atomes de carbone, un groupe cyanure, un groupe ester comprenant 2 à 6 atomes de carbone, un groupe amide comprenant 2 à 6 atomes de carbone, un groupe alicyclique comprenant 5 à 14 atomes de carbone, un groupe hétérocyclique comprenant 2 à 14 atomes de carbone, un groupe aryle comprenant 6 à 14 atomes de carbone ou un groupe hétéroaryle comprenant 2 à 14 atomes de carbone ou Z1 et Z2 peuvent représenter les atomes nécessaires pour former un groupe alicyclique comprenant 5 à 14 atomes de carbone ou un groupe hétérocyclique comprenant 4 à 14 atomes de carbone,
Z3 à Z6 représentent chacun, indépendamment l'un de l'autre, un atome d'hydrogène ou un atome d'halogène,
Z7 et Z7' représentent chacun, indépendamment l'un de l'autre, un atome d'hydrogène, un groupe alkyle comprenant 1 à 6 atomes de carbone, un groupe cyanure, un groupe ester comprenant 2 à 6 atomes de carbone, un groupe amide comprenant 2 à 6 atomes de carbone, un groupe alicyclique comprenant 5 à 14 atomes de carbone, un groupe hétérocyclique comprenant 2 à 14 atomes de carbone, un groupe aryle comprenant 6 à 14 atomes de carbone ou un groupe hétéroaryle comprenant 4 à 14 atomes de carbone, ou Z7 et Z7' peuvent représenter les atomes nécessaires pour former un groupe alicyclique comprenant 5 à 14 atomes de carbone ou un groupe hétérocyclique comprenant 4 à 14 atomes de carbone,
Z8 représente un atome d'hydrogène ou, si au moins un de Z7 et
Z7' représente un atome d'hydrogène, Z8 peut représenter un groupe alkyle comprenant 1 à 6 atomes de carbone, un groupe cyanure, un groupe ester comprenant 2 à 6 atomes de carbone, un groupe amide comprenant 1 à 6 atomes de carbone ou un groupe aryle comprenant 6 à 14 atomes de carbone,
Z9, Z10 et Z11 représentent chacun, indépendamment l'un de l'autre, un atome d'hydrogène ou un atome d'halogène,
Z12 à Z19 représentent chacun, indépendamment l'un de l'autre, un atome d'hydrogène, un groupe alkyle comprenant 1 à 6 atomes de carbone, un groupe aryle comprenant 6 à 14 atomes de carbone ou un groupe hétéroaryle comprenant 2 à 14 atomes de carbone, un groupe cyanure, un groupe ester comprenant 2 à 6 atomes de carbone ou un groupe amide comprenant 2 à 6 atomes de carbone ou une ou plusieurs des combinaisons Z12 et Z13, Z15 et Z16 et Z18 et Z19 peuvent représenter les atomes nécessaires pour former un groupe alicyclique comprenant 5 à 14 atomes de carbone ou un groupe hétérocyclique comprenant 4 à 14 atomes de carbone,
Z20 représente un atome d'hydrogène, un atome d'halogène, un groupe thioalkyle comprenant 1 à 8 atomes de carbone, un groupe thioaryle comprenant 5 à 14 atomes de carbone, un groupe thiohétéroaryle comprenant 3 à 14 atomes de carbone, un groupe aryle comprenant 6 à 14 atomes de carbone, un groupe diarylamino, un groupe alkylsulfonyle comprenant 1 à 8 atomes de carbone, un groupe arylsulfonyle comprenant 6 à 14 atomes de carbone ou un groupe hétéroarylsulfonyle comprenant 2 à 14 atomes de carbone, les nombres entiers m et n représentent, indépendamment l'un de l'autre, 0 ou 1,
Z20' et Z20" représentent chacun, indépendamment l'un de l'autre, un atome d'hydrogène, un groupe alkyle comprenant 1 à 8 atomes de carbone, un groupe cyanure, un groupe ester comprenant 2 à 8 atomes de carbone, un groupe amide comprenant 2 à 8 atomes de carbone ou un groupe aryle comprenant 6 à 14 atomes de carbone ou Z20' et Z20" peuvent représenter les atomes nécessaires pour former un groupe alicyclique comprenant 5 à 14 atomes de carbone ou un groupe hétérocyclique comprenant 4 à 14 atomes de carbone, Z21 et Z22 représentent chacun, indépendamment l'un de l'autre, un atome d'hydrogène, un atome d'halogène, un groupe thioalkyle comprenant 1 à 8 atomes de carbone ou un groupe thioaryle comprenant 5 à 14 atomes de carbone,
X représente l'azote ou un groupe -CH ou, si Z21 et Z22 représentent un atome d'hydrogène, X peut représenter un groupe - CR, où R représente un groupe aryle comprenant 6 à 14 atomes de carbone,
Z23 et Z24 représentent chacun, indépendamment l'un de l'autre, un groupe alkyle comprenant 1 à 8 atomes de carbone ou un groupe aryle comprenant 6 à 14 atomes de carbone ou Z23 et Z24 peuvent représenter les atomes nécessaires pour former un noyau pentagonal à hexagonal,
Z25 représente un atome d'hydrogène ou un groupe aryle,
à condition que, si le groupe de chaîne ChB-4, où m = 0, est combiné simultanément à NucA-1 et NucC-1, R3 et R6 ne représentent pas d'atome d'hydrogène,
**caractérisé en ce que** le colorant absorbant les rayons infrarouges présente un maximum d'absorption dans le spectre infrarouge λₘₐₓ(IR) de plus de 1.100 nm, tel que mesuré par spectroscopie d'absorption dans du chlorure de méthylène contenant 6,5 x 10⁻⁶ % en poids d'acide méthanesulfonique par rapport au chlorure de méthylène.

2. Article marquable au laser selon la revendication 1, **caractérisé en ce que** le colorant absorbant les rayons infrarouges présente un maximum d'absorption dans le spectre infrarouge λₘₐₓ(IR) de plus de 1.125 nm, tel que mesuré par spectroscopie d'absorption dans du chlorure de méthylène contenant 6,5 x 10⁻⁶ % en poids d'acide méthanesulfonique par rapport au chlorure de méthylène.

3. Article marquable au laser selon la revendication 1 ou 2, **caractérisé en ce que** R1 et R5 représentent chacun, indépendamment l'un de l'autre, un groupe alkyle α-ramifié.

4. Article marquable au laser selon l'une quelconque des revendications 1 à 3, **caractérisé en ce que** le colorant absorbant les rayons infrarouges contient ChB-2 comme groupe de chaîne C, Z7 et Z7' représentant les atomes nécessaires pour former un groupe acide barbiturique, où les atomes d'azote sont substitués par un groupe alkyle, un groupe aryle, un groupe alkaryle ou un groupe aralkyle.

5. Article marquable au laser selon l'une quelconque des revendications 1 à 3, **caractérisé en ce que** le colorant absorbant les rayons infrarouges contient un anion non fluoré servant à compenser la charge du cation de colorant contenant NucA-1 et NucC-1 comme respectivement la chaîne A et la chaîne C, R1 et R5 représentant chacun, indépendamment l'un de l'autre, un groupe alkyle ramifié, et ChB-4 comme le groupe de chaîne, Z20 représentant un groupe diphénylamino, un groupe alkylsulfonyle comprenant 1 à 8 atomes de carbone, un groupe arylsulfonyle comprenant 6 à 14 atomes de carbone ou un groupe hétéroarylsulfonyle comprenant 2 à 14 atomes de carbone.

6. Article marquable au laser selon l'une quelconque des revendications précédentes, **caractérisé en ce que** la couche marquable au laser contient un colorant leuco.

7. Article marquable au laser selon l'une quelconque des revendications précédentes, **caractérisé en ce que** la couche marquable au laser contient un liant polymère contenant de l'acétate de vinyle et au moins 85% en poids de chlorure de vinyle par rapport au poids total du liant.

8. Article marquable au laser selon l'une quelconque des revendications précédentes, **caractérisé en ce que** le côté opposé du support polymère transparent est revêtu d'une deuxième couche marquable au laser contenant un deuxième colorant absorbant les rayons infrarouges présentant un maximum d'absorption dans le spectre infrarouge λₘₐₓ(IR-2), où 1.000 nm < λₘₐₓ(IR-2) < 1.100 nm.

9. Article marquable au laser selon la revendication 8, comprenant en outre une troisième couche marquable au laser contenant un troisième colorant absorbant les rayons infrarouges présentant un maximum d'absorption dans le spectre infrarouge λₘₐₓ(IR-3), où 830 nm < λₘₐₓ(IR-3) < 1.000 nm.

10. Procédé de marquage au laser d'un article marquable au laser selon l'une quelconque des revendications 1 à 9 à l'aide d'un laser infrarouge dont la longueur d'onde d'émission est comprise entre 1.130 nm et 1.200 nm.

11. Procédé de marquage au laser selon la revendication 10, **caractérisé en ce que** l'article est en outre marqué au laser à l'aide d'un laser infrarouge dont la longueur d'onde d'émission est comprise entre 1.020 nm et 1.080 nm et/ou à l'aide d'un laser infrarouge dont la longueur d'onde d'émission est comprise entre 830 nm et 940 nm.
